# FASCICULE DE BREVET EUROPEEN

(11) **EP 0 845 850 B1**
(45) Date de publication et mention de la délivrance du brevet: **18.09.2002**
(21) Numéro de dépôt: 96119002.2
(22) Date de dépôt: 27.11.1996
(51) Int. Cl.: H02K 16/02, G04C 3/14, H02K 37/12

(54) **Moteur électromagnétique à deux rotors coaxiaux**
Elektromagnetischer Motor mit zwei koaxialen Rotoren
Electromagnetic motor with two coaxial rotors

(43) Date de publication de la demande: 03.06.1998
(73) Titulaire: Eta SA Fabriques d'Ebauches, 2540 Granges (CH)
(72) Inventeur: Taghezout, Daho, 1110 Morges (CH)
(74) Mandataire: Patry, Didier Marcel Pierre

(56) Documents cités:
- EP-A- 0 312 946
- EP-A- 0 452 252
- EP-A- 0 746 084
- PATENT ABSTRACTS OF JAPAN vol. 16, no. 482 (E-1275), 7 Octobre 1992 & JP 04 172974 A (SEIKO EPSON), 19 Juin 1992,

## Description

La présente invention a pour objet un moteur électromagnétique comportant deux rotors coaxiaux capables de tourner indépendamment l'un de l'autre dans l'un ou l'autre des deux sens de rotation possibles, et destinés notamment à entraîner directement, c'est-à-dire sans interposition d'un train d'engrenage, deux organes mécaniques mobiles, également coaxiaux, tels que deux aiguilles d'une pièce d'horlogerie ou d'un compteur.

Il existe actuellement de nombreuses pièces d'horlogerie comportant au moins une paire d'aiguilles coaxiales destinées à se déplacer indépendamment l'une de l'autre. Parmi ces pièces d'horlogerie, on peut citer à titre d'exemple des montres-chronographes dans lesquelles l'aiguille destinée à afficher les secondes du temps chronométré a le même axe de rotation, situé au centre du cadran, que les aiguilles d'affichage de l'heure et de la minute du temps courant. On peut également mentionner les pièces d'horlogerie dans lesquelles les aiguilles coaxiales destinées à afficher normalement l'heure et la minute du temps courant peuvent également se déplacer indépendamment l'une de l'autre pour afficher une autre information telle que la date, une heure de réveil ou un temps chronométré.

Dans les pièces d'horlogerie de ce type, le déplacement indépendant de deux aiguilles coaxiales est généralement assuré par deux moteurs distincts reliés chacun à l'une des aiguilles par un train d'engrenages.

On connaît par ailleurs des moteurs dits multipolaires dont le rotor tourne par pas de quelques degrés alors que le rotor des moteurs bipolaires classiques tourne par pas de 180°. Dans une pièce d'horlogerie, un tel moteur présente l'avantage que l'aiguille qu'il doit entraîner peut être montée directement sur l'arbre de son rotor. Le train d'engrenages qui doit être utilisé pour relier un moteur bipolaire à l'aiguille qu'il entraîne n'est donc plus nécessaire, ce qui simplifie la construction de la pièce d'horlogerie et diminue son prix de revient.

Le document EP-A- 0 312 946 décrit un ensemble formé de deux moteurs multipolaires superposés. L'arbre du rotor de l'un des moteurs est creux et permet le passage de l'arbre du rotor de l'autre moteur, de sorte que deux aiguilles peuvent être fixées directement sur ces arbres et être entraînées indépendamment l'une de l'autre.

L'épaisseur de cet ensemble est assez importante, d'autant plus qu'un espace non négligeable doit être prévu entre les deux moteurs pour éviter toute influence magnétique de l'un sur l'autre. Cet ensemble moteur a donc l'inconvénient, lorsqu'il est utilisé dans une pièce d'horlogerie, d'imposer à cette dernière une épaisseur importante, ce qui n'est en général pas souhaité.

Un but de la présente invention est donc de proposer un moteur également destiné à entraîner directement deux organes mécaniques coaxiaux tels que des aiguilles d'une pièce d'horlogerie indépendamment l'un de l'autre, mais ayant une épaisseur nettement plus faible que celle de l'ensemble de deux moteurs décrit dans le document mentionné ci-dessus, ce qui permet de l'utiliser dans une pièce d'horlogerie sans que l'épaisseur de celle-ci ne doive être trop importante.

La demande de brevet JP-A-50 77811 décrit un moteur comportant une pluralité de rotors qui peuvent être actionnés indépendamment les uns des autres. Mais ces rotors ne sont pas coaxiaux. D'autre part, des signaux de formes différentes doivent être appliqués à ce moteur pour actionner séparément chacun de ses rotors.

L'élaboration de ces signaux de formes différentes complique la réalisation, et donc augmente le prix, du circuit électronique de commande de ce moteur. En outre, la forme de ces signaux rend le fonctionnement du moteur peu fiable et donne à celui-ci un rendement énergétique peu élevé.

Le document EP-A-0746084, à considérer selon l'article 54(3) de le CBE, décrit un motor birotor multipolaire.

Un autre but de la présente invention est donc de proposer un moteur comportant deux rotors pouvant être commandés indépendamment l'un de l'autre de manière très fiable en réponse à des signaux ayant la forme d'impulsions qui peuvent être produites par un circuit électronique simple et bon marché, et qui permettent de donner à ce moteur un rendement énergétique élevé.

Ces buts sont atteints par le moteur électromagnétique revendiqué, qui comporte :
- un premier et un deuxième rotor mobiles en rotation indépendamment l'un de l'autre autour d'un axe de rotation commun et comprenant respectivement un premier et un deuxième aimant permanent, ledit premier et ledit deuxième aimant permanent ayant respectivement une première et une deuxième pluralité de dipôles magnétiques disposés annulairement et régulièrement autour dudit axe de rotation, orientés sensiblement parallèlement audit axe de rotation alternativement dans un premier sens et dans le sens opposé et ayant chacun un axe géométrique radial, les axes géométriques de deux dipôles magnétiques adjacents dudit premier aimant formant un premier angle au centre ayant une valeur α₁=360°/N₁, où N₁ est le nombre de dipôles magnétiques dudit premier aimant, et les axes géométriques de deux dipôles magnétiques adjacents dudit deuxième aimant formant un deuxième angle au centre ayant une valeur α₂ = 360°/N₂, où N₂ est le nombre de dipôles magnétiques dudit deuxième aimant;
- une première partie statorique comprenant un premier et un deuxième pôle statorique séparés par une première ouverture statorique et comportant respectivement une première pluralité de dents et une deuxième pluralité de dents, les dents desdites première et deuxième pluralités de dents s'étendant radialement, en regard dudit premier aimant, depuis le bord de ladite première ouverture statorique en direction dudit axe de rotation et ayant chacune un axe radial et deux flancs, les axes de deux dents adjacentes de ladite première pluralité de dents et les axes de deux dents adjacentes de ladite deuxième pluralité de dents formant des troisièmes angles au centre ayant une valeur β₁ = 2 α₁, et les dents de l'une desdites première et deuxième pluralités de dents étant déphasées par rapport aux dents de l'autre desdites première et deuxième pluralités de dents d'un premier angle de déphasage ayant une valeur égale à +2α₁/3 dans le sens trigonométrique négatif;
- une deuxième partie statorique comprenant un troisième et un quatrième pôle statorique séparés par une deuxième ouverture statorique et comportant respectivement une troisième pluralité de dents et une quatrième pluralité de dents, les dents desdites troisième et quatrième pluralités de dents s'étendant radialement, en regard dudit deuxième aimant, depuis le bord de ladite deuxième ouverture statorique en direction dudit axe de rotation et ayant chacune un axe radial et deux flancs, les axes de deux dents adjacentes de ladite troisième pluralité de dents et les axes de deux dents adjacentes de ladite quatrième pluralité de dents formant des quatrièmes angles ayant une valeur β₂=2 α₂, et les dents de l'une desdites troisième et quatrième pluralités de dents étant déphasées par rapport aux dents de l'autre desdites troisième et quatrième pluralités de dents d'un deuxième angle de déphasage ayant une valeur égale à +2α₂/3 dans le sens trigonométrique négatif;
- une troisième partie statorique comportant un cinquième pôle statorique disposé entre lesdits aimants, lesdits aimants étant en outre disposés entre ledit cinquième pôle statorique et, respectivement, ledit premier et ledit deuxième pôle statorique d'une part et ledit troisième et ledit quatrième pôle statorique d'autre part;
- une première bobine comportant un noyau ayant une première et une deuxième extrémité respectivement reliées magnétiquement audit premier pôle statorique et audit cinquième pôle statorique;
- une deuxième bobine comportant un noyau ayant une première et une deuxième extrémité respectivement reliées magnétiquement audit troisième pôle statorique et audit cinquième pôle statorique; et
- une troisième bobine comportant un noyau ayant une première extrémité reliée magnétiquement auxdits deuxième et quatrième pôles statoriques et une deuxième extrémité reliée magnétiquement audit cinquième pôle statorique.

Grâce à ces caractéristiques, le moteur selon la présente invention a un encombrement plus faible que l'ensemble de deux moteurs décrit dans le document EP-A-0 312 946 mentionné ci-dessus. Notamment, la présence de la troisième partie statorique entre la première et la deuxième partie statorique assure un découplage magnétique parfait de ces deux dernières parties. Un espace tel que celui qui sépare les deux moteurs de l'ensemble décrit dans le document EP-A-0 312 946 n'est donc pas nécessaire dans le moteur selon la présente invention dont l'épaisseur peut donc être nettement plus faible que celle de cet ensemble moteur.

En outre, et toujours grâce aux caractéristiques énumérées ci-dessus, le moteur selon la présente invention peut être commandé par des impulsions de forme simple, semblable à la forme bien connue des impulsions utilisées pour commander les moteurs pas à pas bipolaires classiques. Il en découle que, par rapport au moteur décrit dans le document JP-A-50-77811, le moteur selon la présente invention peut être commandé par un circuit électronique plus simple et donc meilleur marché, son fonctionnement est plus fiable et son rendement énergétique est plus élevé.

L'homme du métier verra en outre facilement que la troisième partie statorique assure également une fonction de blindage du moteur selon la présente invention contre les champs magnétiques extérieurs, ce qui augmente encore la fiabilité de ce moteur.

D'autres avantages de la présente invention apparaîtront dans la description qui va suivre et qui sera faite, à titre d'exemple non limitatif, à l'aide du dessin annexé dans lequel :
- la figure 1 est une vue d'ensemble d'un moteur selon la présente invention;
- les figures 2 et 3 sont des coupes du moteur de la figure 1 faites respectivement selon les axes II-II et III-III de cette dernière;
- la figure 4 représente un des composants du moteur de la figure 1;
- les figures 5 à 8 représentent en détail des portions de certains composants du moteur de la figure 1; et
- les figures 9 à 14 sont des coupes schématiques du moteur de la figure 1 qui sont destinées à aider à la compréhension du fonctionnement de ce moteur.

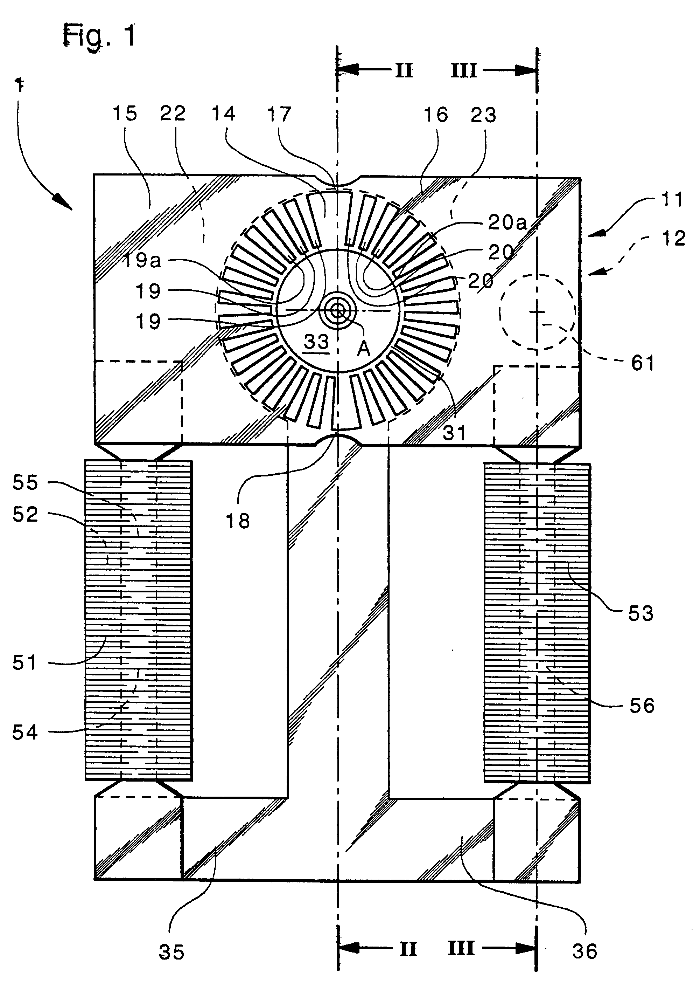

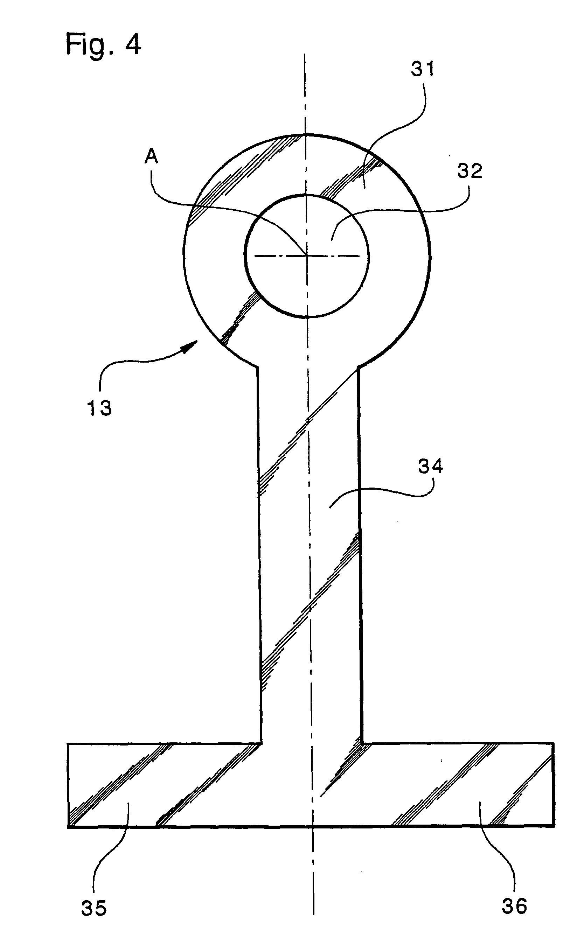

Les figures 1 à 8 représentent schématiquement une forme d'exécution du moteur selon la présente invention, désigné dans son ensemble par la référence 1.

Le moteur 1 comporte deux rotors 2 et, respectivement, 3 agencés de manière à pouvoir tourner indépendamment l'un de l'autre autour d'un axe de rotation commun A. Ces rotors 2 et 3 n'ont pas été représentés à la figure 1 pour ne pas charger inutilement cette dernière.

Les rotors 2 et 3 comportent chacun un aimant permanent 4, respectivement 5, en forme de disque centré sur l'axe de rotation A et comportant une pluralité de dipôles magnétiques 6 disposés régulièrement à sa périphérie. Les dipôles magnétiques 6 ont tous un axe d'aimantation parallèle à l'axe de rotation A, et le sens d'aimantation de chacun d'eux est opposé au sens d'aimantation des deux dipôles magnétiques 6 qui lui sont adjacents. En d'autres termes, les aimants 4 et 5 sont des aimants permanents multipolaires à aimantation axiale.

Dans la suite de cette description, on désignera respectivement par N₁ et N₂ les nombres de dipôles magnétiques 6 que comportent les aimants 4 et 5. De même, on appellera axe géométrique d'un dipôle magnétique 6 le rayon passant par son milieu. En outre, on désignera par α₁ et α₂ les angles aux centres formés respectivement par les axes géométriques de deux dipôles magnétiques 6 adjacents de l'aimant 4, et par les axes géométriques de deux dipôles magnétiques 6 adjacents de l'aimant 5. Ces angles α₁ et α₂ sont évidemment respectivement égaux à 360°/N₁ et à 360°/N₂.

Les rotors 2 et 3 comportent chacun un arbre 7, respectivement 8, ayant un axe confondu avec l'axe de rotation A et dont une extrémité est solidaire de l'aimant 4, respectivement 5.

L'arbre 7 du rotor 2 est creux, et il est disposé autour d'un tube de guidage 9 ayant un axe également confondu avec l'axe de rotation A. L'arbre 7 est disposé autour du tube de guidage 9 de manière à pouvoir tourner librement autour de l'axe de rotation A mais à être fixe en translation par rapport à ce dernier.

L'arbre 8 du rotor 3 est disposé à l'intérieur du tube de guidage 9, également de manière à être libre en rotation autour de l'axe A mais fixe en translation par rapport à ce dernier.

Le tube de guidage 9 est fixé en rotation et en translation d'une manière qui sera décrite plus loin.

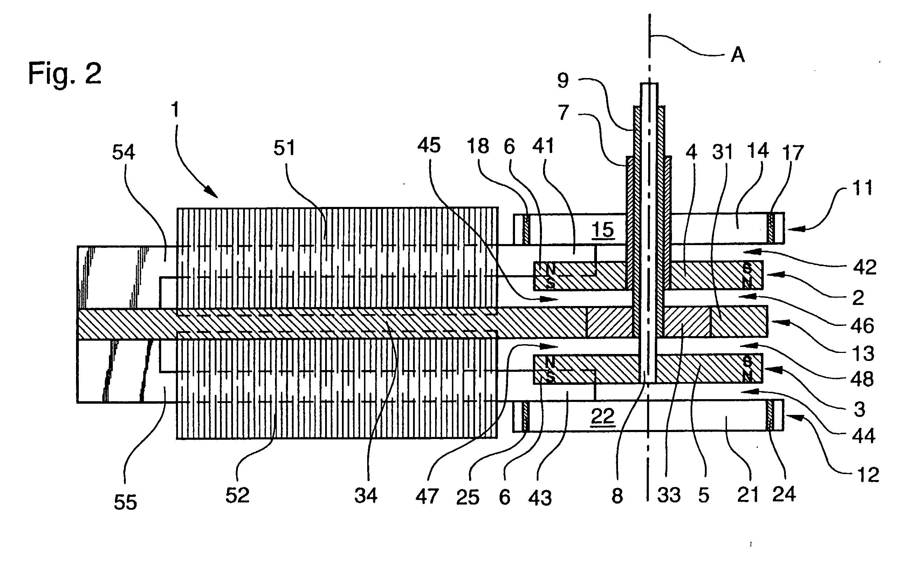

Les moyens qui empêchent toute translation des arbres 7 et 8 par rapport à l'axe A tout en permettant leur rotation par rapport à ce dernier sont bien connus des spécialistes et n'ont pas été représentés dans la figure 2 pour ne pas la charger inutilement. De même, les moyens de fixation des aimants 4 et 5 aux arbres 7 et, respectivement, 8 n'ont pas non plus été représentés dans la figure 2, où les rotors 2 et 3 ne sont représentés que par les aimants 4 et 5 et par les arbres 7 et 8.

Dans le présent exemple où les aimants 4 et 5 ont la forme de disques, et pour une raison qui sera rendue évidente par la suite de cette description, les arbres 7 et 8 ainsi que le tube de guidage 9 sont réalisés en un matériau non magnétique tel que, par exemple, le laiton.

Dans une autre forme d'exécution du moteur 1, non représentée, les aimants 4 et/ou 5 ont la forme d'anneaux centrés sur l'axe de rotation A et fixés sur un disque. Si ce dernier disque est en un matériau non magnétique tel que le laiton, les arbres 7 et 8 ainsi que le tube de guidage 9 peuvent être réalisés en un matériau magnétique tel que l'acier.

Les deux organes mécaniques coaxiaux, non représentés, qui doivent être entraînés par le moteur 1 peuvent être respectivement fixés à l'extrémité libre de l'arbre 7, qui dépasse de préférence le tube de guidage 9, et à l'extrémité libre de l'arbre 8. Les moyens de fixation de ces organes mécaniques à ces arbres 7 et 8 n'ont pas non plus été représentés car ils peuvent être de natures très diverses et sont de toute façon bien connus des spécialistes.

Le moteur 1 comporte encore une première et une deuxième partie statorique désignées respectivement par les références 11 et 12. Ces parties statoriques 11 et 12 sont disposées de part et d'autre d'une troisième partie statorique 13.

Les trois parties statoriques 11, 12 et 13 sont réalisées en un matériau ayant une grande perméabilité magnétique tel que l'un des matériaux bien connus couramment utilisés pour réaliser le stator des moteurs pas à pas qui entraînent les aiguilles d'une grande partie des pièces d'horlogerie fabriquées actuellement.

Dans le présent exemple, les parties statoriques 11, 12 et 13 sont planes, parallèles entre elles et perpendiculaires à l'axe de rotation A.

En outre, les aimants permanents 4 et 5 des rotors 2 et 3 sont situés de part et d'autre de la partie statorique 13 et entre cette dernière et, respectivement, les parties statoriques 11 et 12.

La partie statorique 11 est percée d'une ouverture 14 circonscrite par un cercle centré sur l'axe de rotation A et ayant à peu près le même diamètre que l'aimant 4 du rotor 2. Cette ouverture 14 sépare la partie statorique 11 en deux portions dont on verra plus loin qu'elles constituent des pôles statoriques qui seront désignés par les références 15 et 16.

La forme et les dimensions de la partie statorique 11 sont choisies de manière que les pôles statoriques 15 et 16 ne soient reliés que par de zones, ou isthmes, 17 et 18 ayant une section suffisamment faible pour que leur réluctance magnétique soit très élevée.

Les pôles statoriques 15 et 16 comportent chacun une pluralité de dents, désignées respectivement par les références 19 et 20, qui s'étendent radialement depuis le bord de l'ouverture 14 en direction de l'axe de rotation A. Ces dents 19 et 20 sont séparées les unes des autres par des espaces, et leur disposition exacte sera décrite plus loin. On mentionnera simplement ici que la dent 19 et la dent 20 qui sont les plus proches de l'isthme 17 sont respectivement désignées par 19a et 20a.

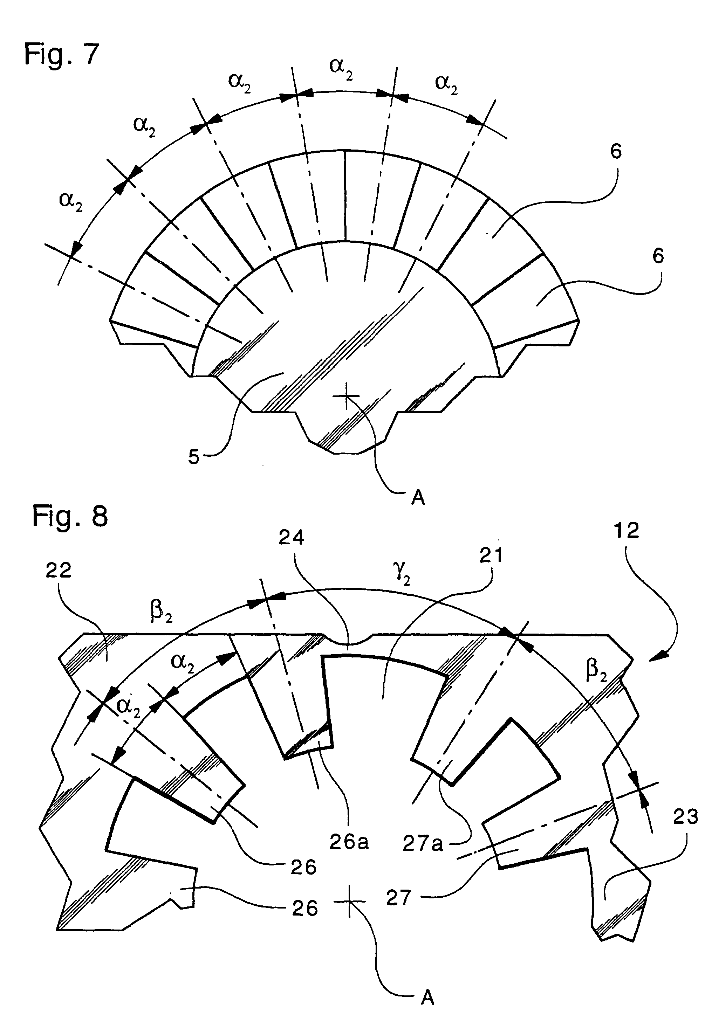

La partie statorique 12, qui n'est pas visible à la figure 1 mais qui est partiellement représentée dans les figures 2 et 8, est également percée d'une ouverture désignée par la référence 21. Cette ouverture 21 est aussi circonscrite par un cercle centré sur l'axe de rotation A et ayant à peu près le même diamètre que l'aimant du rotor 3. L'ouverture 21 sépare la partie statorique 12 en deux portions dont on verra plus loin qu'elles constituent également des pôles statoriques qui seront désignés par les références 22 et 23. La forme et les dimensions de la partie statorique 12 sont choisies de manière que les pôles statoriques 22 et 23 ne soient reliés que par des isthmes 24 et 25 ayant une section suffisamment faible pour que leur réluctance magnétique soit aussi très élevée.

Les pôles statoriques 22 et 23 comportent également chacun une pluralité de dents, désignées respectivement par les références 26 et 27, qui s'étendent radialement depuis le bord de l'ouverture 21 en direction de l'axe de rotation A et qui sont aussi séparées par des espaces. La disposition exacte des dents 26 et 27 sera aussi décrite plus loin. On mentionnera simplement ici que la dent 26 et la dent 27 qui sont les plus proches de l'isthme 24 sont respectivement désignées par 26a et 27a.

Il faut noter que les dents 19 et 26 n'ont pas été représentées à la figure 2 pour ne pas charger inutilement cette dernière.

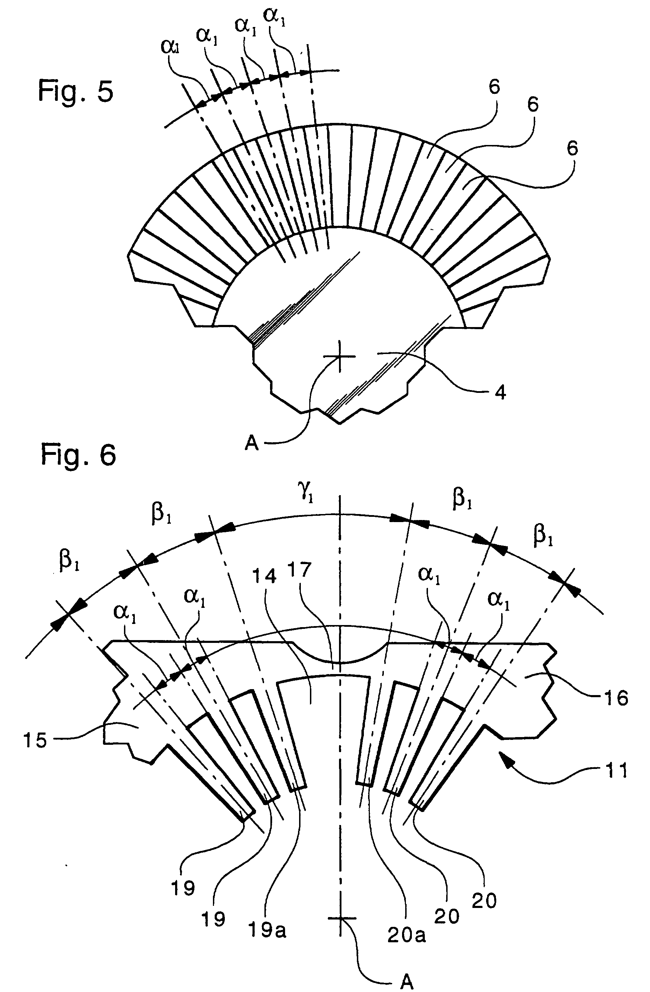

Pour une raison qui sera rendue évidente plus loin, les angles au centre formés par les axes de deux dents 19 adjacentes et par les axes de deux dents 20 adjacentes, qui sont désignés par β1 dans la figure 6, sont égaux entre eux et au double de l'angle α₁ défini ci-dessus.

En outre,dans cet exemple, l'angle au centre formé par les flancs d'une dent 19, ou d'une dent 20, est sensiblement égal à l'angle au centre formé par les flancs de deux dents 19, ou 20, adjacentes, qui délimitent l'espace séparant ces deux dents. Ces angles sont donc tous deux sensiblement égaux à l'angle α₁.

Par contre, l'angle au centre formé par les axes des dents 19a et 20a, qui est désigné par γ₁ dans la figure 6, n'est pas un multiple entier de l'angle α₁ ou de l'angle β₁, mais il est égal à (k₁.β₁ + β₁/3), où k₁ est un nombre entier.

Les dents 19 et, respectivement, 20 étant disposées régulièrement autour de l'ouverture 14 comme cela a été décrit ci-dessus et ayant donc ce qui peut être appelé une périodicité angulaire, on dira dans la suite de cette description que, dans le sens trigonométrique négatif, les dents 20 sont déphasées par rapport aux dents 19 d'un angle égal à +β₁/3, c'est à dire à +2α₁/3. Cet angle sera appelé angle de déphasage des dents 20 par rapport aux dents 19.

De même, les angles au centre formés par les axes de deux dents 26 adjacentes ou par les axes de deux dents 27 adjacentes, qui sont désignés par β₂ dans la figure 8, sont égaux entre eux et au double de l'angle α₂ défini ci-dessus.

En outre, toujours dans cet exemple, l'angle au centre formé par les flancs d'une dent 26, ou d'une dent 27, est sensiblement égal à l'angle au centre formé par les flancs de deux dents 26, ou 27, adjacentes, qui définissent l'espace séparant ces deux dents. Ces angles sont donc tous deux sensiblement égaux à l'angle α₂.

Par contre, l'angle au centre formé par les axes des dents 26a et 27a, qui est désigné par γ₂ dans la figure 8, n'est pas non plus un multiple entier des angles α₂ ou β₂, mais il est égal à (k₂.β₂ + β₂/3), où k₂ est un nombre entier. Pour des raisons analogues à celles qui ont été exposées ci-dessus à propos des dents 19 et 20, on dira dans la suite de cette description que, dans le sens trigonométrique négatif, les dents 27 sont déphasées par rapport aux dents 26 d'un angle égal à +β_{2/3} c'est-à-dire à +2α₂/3. Cet angle sera appelé angle de déphasage des dents 27 par rapport aux dents 26.

On verra plus loin que les rotors 2 et 3 du moteur 1 tournent par pas successifs, et que le nombre de pas effectués par chacun de ces rotors 2 et 3 pour tourner d'un tour complet, soit de 360°, est égal au nombre N₁, respectivement N₂, des dipôles magnétiques 6 que comporte leur aimant permanent 4, respectivement 5. Les angles parcourus par ces rotors 4 et 5 à chacun de leurs pas sont donc respectivement les angles α₁ et α₂ définis ci-dessus.

Ainsi, par exemple, si l'organe mécanique fixé à l'arbre 7 du rotor 2 est l'aiguille des secondes d'une pièce d'horlogerie et que ce rotor 2 doit donc tourner de 60 pas par tour, l'aimant 4 doit comporter 60 dipôles magnétiques 6. Les angles α₁ et β₁ ont donc respectivement une valeur de 6° et de 12°.

En outre, l'angle de déphasage des dents 20 par rapport aux dents 19, tel qu'il a été défini ci-dessus, est égal à 12°/3, soit 4°.

Toujours dans cet exemple, si le nombre k₁ a été choisi égal à 2, l'angle γ₁ défini ci-dessus est égal à (2.12° + 12°/3), soit 28°.

C'est un tel exemple qui est représenté à la figure 1 et, plus en détail, aux figures 5 et 6.

Toujours par exemple, si le rotor 3 doit tourner de 20 pas par tour, son aimant 5 doit comporter 20 dipôles magnétiques 6. Les angles α₂ et β₂ ont donc respectivement une valeur de 18° et de 36°, et l'angle de déphasage des dents 27 par rapport aux dents 26, est égal à 36°/3, soit 12°.

Si le nombre k₂ est égal à 1, l'angle γ₂ est égal à (36° + 12°), soit 48°.

C'est un tel exemple qui est représenté en détail aux figures 7 et 8.

Il faut noter que la présente invention n'est évidemment pas limitée aux exemples qui viennent d'être décrits mais que les nombres N₁ et N₂ de dipôles magnétiques 6 que comportent respectivement les aimants 4 et 5 peuvent être quelconque, à la seule condition d'être pairs. Notamment, ces nombres N₁ et N₂ peuvent être égaux.

Dans cet exemple, la partie statorique 13 comporte une portion annulaire dont on verra plus loin qu'elle constitue un pôle statorique qui sera désigné par la référence 31.

Les deux cercles qui délimitent le pôle statorique 31 sont centrés sur l'axe de rotation A, et leurs diamètres sont en outre choisis de manière que le pôle statorique 31 soit situé en regard des dents 19, 20, 26 et 27 faisant respectivement partie des pôles statoriques 15, 16, 22 et 23.

L'ouverture centrale du pôle statorique 31, désignée par la référence 32, est occupée par un flasque 33 en forme de disque, qui est réalisé de préférence en un matériau non magnétique tel que le laiton.

Le flasque 33 sert de support au tube de guidage 9, mentionné ci-dessus, qui est fixé en son centre.

Les moyens de fixation du tube de guidage 9 au flasque 33 et de ce dernier au pôle statorique 31 n'ont pas été représentés pour ne pas charger inutilement le dessin et parce qu'ils peuvent être de natures diverses et sont bien connus des spécialistes.

La partie statorique 13 comporte encore une partie de liaison 34 ayant dans cet exemple la forme générale d'un T dont la barre verticale est reliée au pôle statorique 31. Les extrémités de la barre horizontale de la portion de liaison 34, dont il sera question plus loin, sont respectivement désignée par les références 35 et 36.

Les parties statoriques 11 à 13, et notamment les pôles statoriques 15, 16, 22, 23 et 31, sont évidemment agencées de manière que les rotors 2 et 3 puissent tourner librement.

Ainsi, il subsiste des espaces, ou entrefers, 41 et 42 entre l'aimant 4 du rotor 2 d'une part et, respectivement, les dents 19 du pôle statorique 15 et les dents 20 du pôle statorique 16 d'autre part. De même, il subsiste des entrefers 43 et 44 entre l'aimant 5 du rotor 3 d'une part et, respectivement, les dents 26 du pôle statorique 22 et les dents 27 du pôle statorique 23 d'autre part.

En outre, il subsiste entre l'aimant 4 et le pôle statorique 31 des entrefers 45 et 46 situés respectivement en regard des entrefers 41 et 42. Enfin, il substitue entre l'aimant 5 et le pôle statorique 31 des entrefers 47 et 48 situés respectivement en regard des entrefers 43 et 44.

Le moteur 1 comporte encore trois bobines 51, 52 et 53 ayant chacune un noyau 54, 55 et, respectivement, 56.

Ces bobines 51 à 53 ne seront pas décrites plus en détail car elles sont analogues aux bobines bien connues qui sont utilisées dans les moteurs pas à pas classiques couramment employés dans les pièces d'horlogerie électronique.

Les extrémités du noyau 54 de la bobine 51 sont respectivement reliées, mécaniquement et magnétiquement, au pôle statorique 15 de la partie statorique 11 et à l'extrémité 35 de la portion de liaison 34 de la partie statorique 13.

Les extrémités du noyau 55 de la bobine 52 sont respectivement reliées, mécaniquement et magnétiquement, au pôle statorique 15 de la partie statorique 11 et à l'extrémité 35 de la portion de liaison 34 de la partie statorique 13.

Les extrémités du noyau 56 de la bobine 53 sont respectivement reliées, mécaniquement et magnétiquement, au pôle statorique 16 de la partie statorique 11 et à l'extrémité 36 de la portion de liaison 34 de la partie statorique 13.

Le moteur 1 comporte encore une entretoise 61 réalisée en un matériau ayant une grande perméabilité magnétique tel que l'un des matériaux bien connus couramment utilisés pour réaliser le stator des moteurs pas à pas.

Les extrémités de l'entretoise 61 sont respectivement reliées, mécaniquement et magnétiquement, au pôle statorique 16 de la partie statorique 11 et au pôle statorique 23 de la partie statorique 12. Ce pôle statorique 23 est donc également relié magnétiquement à la bobine 53.

Les moyens de liaison mécanique et magnétique des noyaux 54 à 56 et de l'entretoise 61 avec les parties statoriques 11 à 13 peuvent être de diverses natures et sont bien connus des spécialistes. Ces moyens n'ont pas été représentés pour ne pas charger inutilement le dessin.

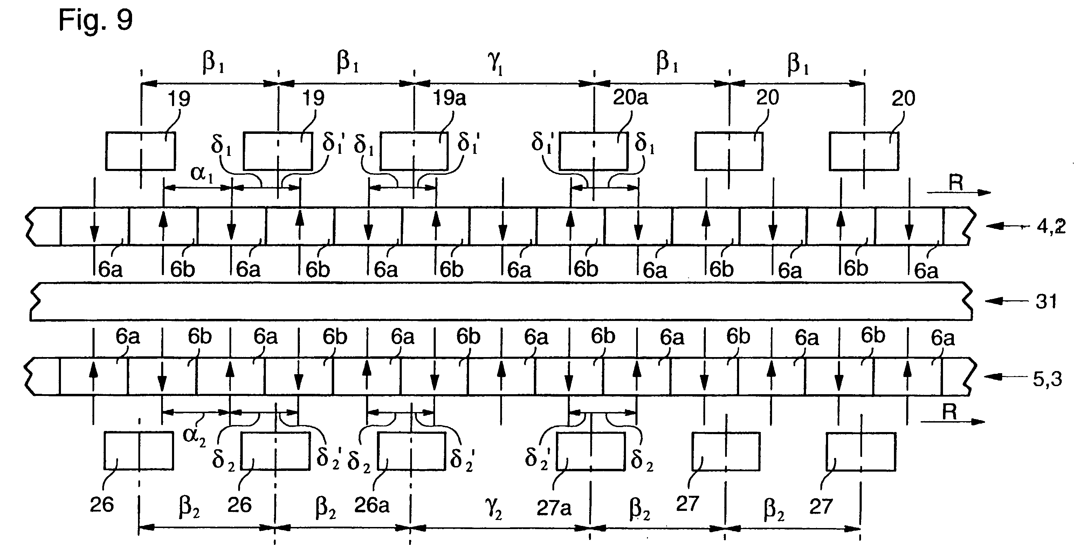

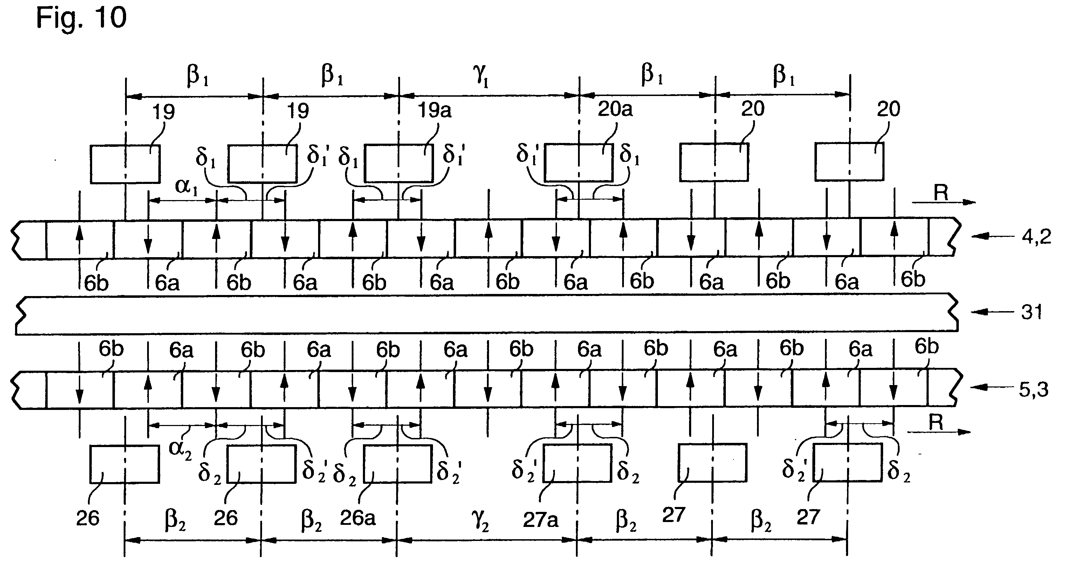

Les figure 9 et 10 représentent schématiquement les dents 19, 20, 26 et 27, les aimants 4 et 5 ainsi que le pôle statorique 31 du moteur 1 comme si ces éléments avaient été coupés par un cylindre circulaire ayant un axe confondu avec l'axe de rotation A et que ce cylindre avait été coupé lui-même le long de l'une de ses génératrices puis aplani pour former le plan dans lequel les figures 9 et 10 sont dessinées. On notera que seules les parties de ces éléments situées à proximité des isthmes 17 et 24 sont représentées dans ces figures 9 et 10.

Il découle de la manière dont ces figures 9 et 10 sont été réalisées que les divers angles au centre mentionnés ci-dessus et ceux qui seront définis plus loin sont représentés par des segments de droites horizontaux. En outre, les rotations dans le sens trigonométrique négatif des rotors 2 ou 3, et donc des aimants 4 ou 5 respectifs, correspondent à des translations de la représentation de ces aimants 4 ou 5 dans le sens des flèches R dessinées dans ces figures 9 et 10.

Les axes d'aimantation des dipôles magnétiques 6 des aimants 4 et 5 ont été symbolisés dans les figures 9 et 10 par des flèches pointées de manière usuelle de leur pôle sud vers leur pôle nord.

Pour simplifier la description qui va suivre, on désignera par 6a tous les dipôles magnétiques 6 dont l'axe d'aimantation est dirigé vers le pôle statorique 31, et par 6b tous les dipôles magnétiques dont l'axe d'aimantation a le sens opposé.

La présence des dents 19 et 20 et des espaces qui les séparent en regard de l'aimant 4 provoque l'application au rotor 2 d'un couple de positionnement qui tend à le maintenir ou à le ramener dans l'une ou l'autre d'une pluralité de positions angulaires déterminées qui seront appelées positions de repos du rotor 2. De même, la présence des dents 26 et 27 et des espaces qui les séparent en regard de l'aimant 5 provoque l'application au rotor 3 d'un couple de positionnement qui tend à le maintenir ou à le ramener dans l'une ou l'autre d'une pluralité de positions angulaires déterminées qui seront appelées positions de repos du rotor 3.

Les nombres de positions de repos des rotors 2 et 3 sont bien entendu respectivement égaux aux nombre N₁ et N₂ de dipôles magnétiques 6 que comportent les aimants 4 et 5.

Les angles que doivent parcourir les rotors 2 et 3 pour passer de l'une quelconque de leurs positions de repos à la suivante, dans un sens ou dans l'autre, sont donc respectivement égaux à l'angle α₁ et à l'angle α₂ définis ci-dessus. L'homme du métier verra facilement que, lorsqu'ils tournent de l'une de leurs positions de repos à la suivante, les rotors 2 et 3 passent chacun par une position d'équilibre instable après avoir parcouru un angle sensiblement égal à α₁/2 et, respectivement, à α₂/2. L'homme du métier sait également que, avant que les rotors 2 et 3 aient atteint cette position d'équilibre instable, le couple de positionnement auquel ils sont soumis tend à les ramener à leur position de départ et que, dès qu'ils ont dépassé cette position d'équilibre instable, ce couple de positionnement tend à les amener à leur position d'arrivée.

Pour des raisons de symétrie évidentes, un des dipôles magnétiques 6a et un des dipôles magnétiques 6b, adjacent au précédent, sont tous deux partiellement situés en regard de chacune des dents 19, 20, 26 et 27 dans chacune des positions de repos de ces rotors 2 et 3.

Plus précisément, dans chaque position de repos du rotor 2, les axes géométriques des deux dipôles 6a et 6b situés en regard de l'une quelconque des dents 19 forment avec l'axe de cette dernière deux angles valant respectivement 2α₁/3 et α₁/3. Ces deux angles sont respectivement désignés par δ₁ et δ₁' dans les figures 9 et 10.

On a vu ci-dessus que les angles β₁ formés par les axes de deux dents 19 adjacentes sont égaux au double des angles α₁ formés par les axes géométriques de deux dipôles magnétiques 6a et 6b adjacents. Il en résulte que, dans une moitié des N₁ positions de repos du rotor 2, c'est toujours l'axe géométrique d'un dipôle magnétique 6a qui forme avec l'axe d'une dent 19 l'angle δ₁ défini ci-dessus. La figure 9 représente un cas où le rotor 2 occupe une de ces positions de repos qui seront appelées arbitrairement premières positions de repos de ce rotor 2.

Dans l'autre moitié des N₁ positions de repos du rotor 2, c'est évidemment toujours l'axe géométrique d'un dipôle magnétique 6b qui forme l'angle δ₁ avec l'axe d'une dent 19. La figure 10 représente un cas où le rotor 2 occupe une de ces autres positions de repos, qui seront appelées arbitrairement deuxièmes positions de repos de ce rotor 2.

Les dipôles magnétiques 6a et 6b ont également ce qui peut être appelé une périodicité angulaire. On peut donc dire que l'angle δ₁ défini ci-dessus est l'angle de déphasage des dipôles magnétiques 6a et 6b par rapport aux dents 19 lorsque le rotor 2 se trouve respectivement dans l'une de ses premières et l'une de ses deuxièmes positions de repos.

Dans le présent exemple, dans toutes les positions de repos du rotor 2, chaque dipôle magnétique 6a ou 6b dont l'axe géométrique forme l'angle δ₁ défini ci-dessus avec l'axe d'une dent 19 est situé en arrière de cette dent 19 par rapport au sens trigonométrique négatif symbolisé par la flèche R du fait que les dents 20 sont déphasées de +2α₁/3 dans le sens trigonométrique négatif par rapport aux dents 19.

On peut donc dire que, lorsque la rotor 2 se trouve dans l'une de ses premières ou dans l'une de ses deuxièmes positions de repos, l'angle δ₁ de déphasage des dipôles magnétiques 6a ou respectivement 6b par rapport aux dents 19 est égal à -2α₁/3 dans le sens trigonométrique négatif.

On a vu ci-dessus que les dents 20 sont déphasées par rapport aux dents 19 d'un angle égal à +β₁/3, ou à +2α₁/3, dans le sens trigonométrique négatif. Il en résulte que, dans chacune des positions de repos du rotor 2, un dipôle magnétique 6a et un dipôle magnétique 6b adjacent au précédent sont tous deux partiellement situés en regard de l'une des dents 20. En outre, les axes géométriques de ces deux dipôles 6a et 6b forment avec l'axe de cette dent 20 deux angles valant aussi 2α₁/3 et α₁/3. Ces angles sont également respectivement désignés par les références δ₁ et δ₁' dans les figures 9 et 10.

De plus, dans toutes les premières positions de repos du rotor 2, c'est aussi l'axe géométrique d'un dipôle 6a qui forme l'angle δ₁ avec l'axe d'une dent 20. Par conséquent, c'est aussi l'axe géométrique d'un dipôle 6b qui forme l'angle δ₁ avec l'axe d'une dent 20 dans toutes les deuxièmes positions de repos du rotor 2.

Par contre, le déphasage des dents 20 par rapport aux dents 19 défini ci-dessus a pour conséquence que, dans toutes les positions de repos du rotor 2, chaque dipôle magnétique 6a ou 6b dont l'axe géométrique forme l'angle δ₁ défini ci-dessus avec l'axe d'une dent 20 est situé en avant de cette dernière par rapport au sens trigonométrique négatif. En d'autres termes, on peut donc dire que lorsque le rotor 2 est dans l'une de ses premières positions de repos ou dans l'une de ses deuxièmes positions de repos, l'angle de déphasage δ₁ des dipôles magnétiques 6a ou, respectivement, 6b par rapport aux dents 20 est égal à +2α₁/3 dans le sens trigonométrique négatif.

En résumé, on voit que dans le présent exemple où les dents 20 sont déphasées, dans le sens trigonométrique négatif, d'un angle égal à +2α₁/3 par rapport aux dents 19, les dipôles magnétiques 6a et, respectivement, 6b de l'aimant 4 sont déphasés, dans le sens trigonométrique négatif, d'un angle égal à -2 α₁/3 par rapport aux dents 19 et d'un angle égal à +2 α₁/3 par rapport aux dents 20, lorsque le rotor 2 occupe ses premières et, respectivement, ses deuxièmes positions de repos.

Des considérations similaires à celles qui ont été faites ci-dessus à propos du rotor 2 montrent que le rotor 3 a également des premières et des deuxièmes positions de repos dans lesquelles l'axe de chacune des dents 26 et 27 forme avec l'axe géométrique d'un dipôle magnétique 6a ou, respectivement, 6b un angle de déphasage δ₂ égal à 2α₂/3.

En outre, dans le présent exemple où les dents 27 sont déphasées, dans le sens trigonométrique négatif, d'un angle égal à +α₂/3 par rapport aux dents 26, les dipôles magnétiques 6a et, respectivement, 6b de l'aimant 5 sont déphasés, dans le sens trigonométrique négatif, d'un angle égal à -2α₂/3 par rapport aux dents 26 et d'un angle égal à +2α₂/3 par rapport aux dents 27 dans les premières et deuxièmes positions de repos du rotor 3.

Les figures 9 et 10 illustrent aussi deux cas où le rotor 3 occupe respectivement l'une de ses premières et l'une de ses deuxièmes positions de repos.

Lorsqu'un courant électrique traverse la bobine 51, le flux magnétique qu'il crée dans le noyau 54, qui sera désigné par F1, se referme sur lui-même en suivant un chemin qui comporte successivement le pôle statorique 15, les dents 19 de ce dernier, l'entrefer 41, l'aimant 4 du rotor 2, l'entrefer 45, le pôle statorique 31 et la portion de liaison 34.

De même, lorsqu'un courant électrique traverse la bobine 52, le flux magnétique qu'il crée dans le noyau 55, qui sera désigné par F2, se referme sur lui-même en suivant un chemin qui comporte successivement le pôle statorique 22, les dents 26 de ce dernier, l'entrefer 43, l'aimant 5 du rotor 3, l'entrefer 47, le pôle statorique 31 et la portion de liaison 34.

En outre, lorsqu'un courant électrique traverse la bobine 53, le flux magnétique qu'il crée dans le noyau 56 qui sera désigné par F3, se referme sur lui-même en suivant deux chemins parallèles passant tous deux par le pôle statorique 16. De ce pôle statorique 16, un des chemins passe successivement par les dents 20, l'entrefer 42, l'aimant 4 du rotor 2, l'entrefer 46, le pôle statorique 31 et la portion de liaison 34. L'autre de ces chemins partant du pôle statorique 16 passe successivement par l'entretoise 61, le pôle statorique 23, les dents 27 de ce dernier, l'entrefer 44, l'aimant 5 du rotor 3, l'entrefer 48, le pôle statorique 31 et la portion de liaison 34.

Les portions du flux magnétique F3 passant par ces deux chemins seront appelées respectivement flux magnétiques F3a et F3b.

Il faut noter qu'une partie des flux magnétiques F1, F2 ou F3 passe évidemment par les isthmes 17 et 18 et/ou 24 et 25 et se referme sur elle-même en suivant tout ou partie des chemins mentionnés ci-dessus. Mais la réluctance magnétique de ces isthmes 17, 18, 24 et 25 est suffisamment grande pour que ces parties des flux F1, F2 ou F3 soient négligées.

Il faut également relever que les flux magnétiques F1, F2, F3a et F3b ont tous une direction sensiblement parallèle à l'axe de rotation A entre les parties statoriques 11 et 12 d'une part et la partie statorique 13 d'autre part. Lorsqu'ils traversent les aimants 4 ou 5, ces flux F1, F2, F3a et F3b ont donc une direction parallèle à celle des axes d'aimantation des dipôles magnétiques 6.

Le sens de ces flux F1, F2, F3a et F3b dépend évidemment du sens du courant qui les produit en passant dans les bobines 51 à 53.

On admettra arbitrairement que ces flux F1, F2, F3a et F3b sont positifs lorsqu'ils traversent les aimants 4 ou 5 dans un sens allant des parties statoriques 11 et 12, ou plus précisément des dents 19, 20, 26 ou 27, vers la partie statorique 13, ou plus précisément vers le pôle statorique 31. Ces flux F1, F2, F3a et F3b seront évidemment qualifiés de négatifs dans le cas contraire.

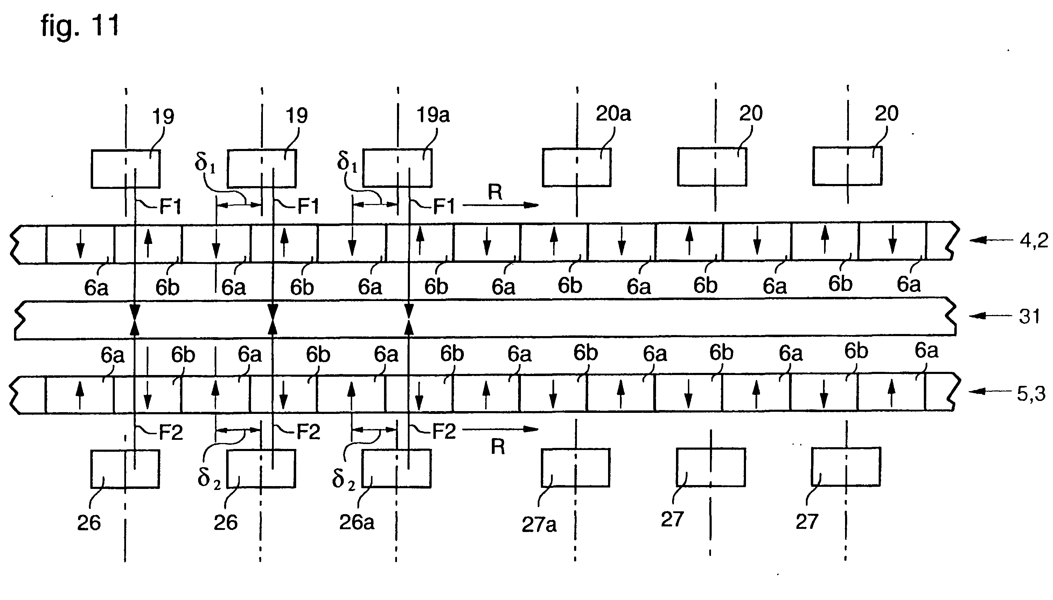

Dans les figures 11 à 14 qui seront décrites plus loin, les résultantes de ces flux F1, F2, F3a et F3b sont symbolisées par les flèches désignées par les mêmes références. Il faut noter que, pour rendre ces figures 11 à 14 plus claires, ces flèches y ont été légèrement décalées par rapport aux axes des dents 19, 20, 26 ou 27. Il est cependant évident que, en réalité, les résultantes de ces flux F1, F2, F3a ou F3b ont une direction qui est confondue avec la direction de ces axes des dents 19, 20, 26 ou 27.

Le circuit de commande du moteur 1 n'a pas été représenté et ne sera pas décrit ici car un spécialiste n'aura aucune peine à le réaliser au vu des explications qui seront données ci-après.

On mentionnera simplement que ce circuit de commande est agencé de manière à appliquer aux bobines 51, 52 et/ou 53 une impulsion motrice chaque fois que le rotor 2 ou le rotor 3 doit tourner d'un pas.

En outre, ce circuit de commande peut être agencé de manière que, pendant chaque impulsion motrice, la tension appliquée à l'une et/ou l'autre de ces bobines 51 à 53 soit constante, ou que ce soit le courant circulant dans l'une et/ou l'autre de ces bobines 51 à 53 qui soit constant. L'homme du métier verra facilement que le moteur 1 fonctionne quel que soit le type des impulsions motrices qui sont appliquées à ses bobines 51, 52 et/ou 53. Ce type d'impulsion motrice ne sera donc pas précisé dans la suite de cette description. On qualifiera simplement de positive ou de négative toute impulsion motrice qui provoque la création d'un flux magnétique F1, F2, F3a et/ou F3b positif ou, respectivement, négatif par la bobine 51, 52 et/ou 53 à laquelle elle est appliquée.

L'homme du métier verra aussi facilement que la durée des impulsions motrices peut être soit fixe soit variable. Dans tous les cas, cette durée est bien entendu déterminée de manière que le rotor 2 ou 3 concerné termine correctement son pas en réponse à chaque impulsion motrice, même si le couple résistant qu'il doit vaincre pendant cette impulsion motrice a la valeur maximale pour laquelle le moteur 1 est conçu.

L'homme du métier sait bien que, en pratique, cette durée est déterminée de préférence de manière que le rotor 2 ou 3 concerné ait au moins atteint une position angulaire située un peu avant sa position d'équilibre instable définie ci-dessus à l'instant où l'impulsion motrice est interrompue. Lorsque ce rotor 2 ou 3 a atteint cette position angulaire, il termine son pas grâce à son inertie et à celle du ou des éléments mécaniques qu'il entraîne et, après qu'il a dépassé sa position d'équilibre instable, grâce au couple de positionnement qui tend alors à l'amener à sa prochaine position de repos.

Pour ne pas compliquer inutilement la description qui va suivre, on admettra que le circuit de commande du moteur 1 est agencé de manière que la durée de toutes les impulsions motrices qu'il applique aux bobines 51, 52 et/ou 53 est déterminée comme cela vient d'être décrit.

Les figures 11 à 14 sont semblables aux figures 9 et 10 décrites ci-dessus. Cependant, pour ne pas charger inutilement ces figures 11 à 14 , seules les références utilisées dans les explications qu'elles illustrent y ont été indiquées.

On admettra que, au moment où commence cette description du fonctionnement du moteur 1, le rotor 2 est dans l'une de ses premières positions de repos. Ce sont donc les dipôles magnétiques 6a de l'aimant 4 qui sont déphasés de l'angle δ₁ par rapport aux dents 19, et cet angle de déphasage δ₁ est égal à -β₁/3 dans le sens trigonométrique négatif. La figure 11 illustre une telle situation.

Si le circuit de commande du moteur 1 applique alors une impulsion motrice positive à la bobine 51, le flux magnétique F1 créé par cette dernière traverse l'aimant 4 dans le sens allant des dents 19 vers le pôle statorique 31, comme cela est représenté à la figure 11. Dans l'aimant 4, le flux magnétique F1 a donc le même sens que les axes d'aimantation des dipôles magnétiques 6a.

L'interaction du flux magnétique F1 et du flux produit par les dipôles magnétiques 6a et 6b situés partiellement en regard des dents 19 crée, de manière bien connue, un couple qui tend à aligner les axes d'aimantation de ces derniers dipôles magnétiques 6a avec ce flux F1. Ce couple, qui sera qualifié de moteur, fait donc tourner l'aimant 4, et donc le rotor 2, dans le sens trigonométrique négatif symbolisé par la flèche R.

Après la fin de cette impulsion motrice positive appliquée à la bobine 51, le rotor 2 termine son pas comme cela a été décrit ci-dessus et s'arrête dans la prochaine de ses deuxièmes positions de repos. Le rotor 2 reste ensuite dans cette deuxième position de repos jusqu'à ce que le circuit de commande du moteur 1 applique une nouvelle impulsion motrice aux bobines 51, 52 et/ou 53 dans des circonstances qui seront décrites plus loin.

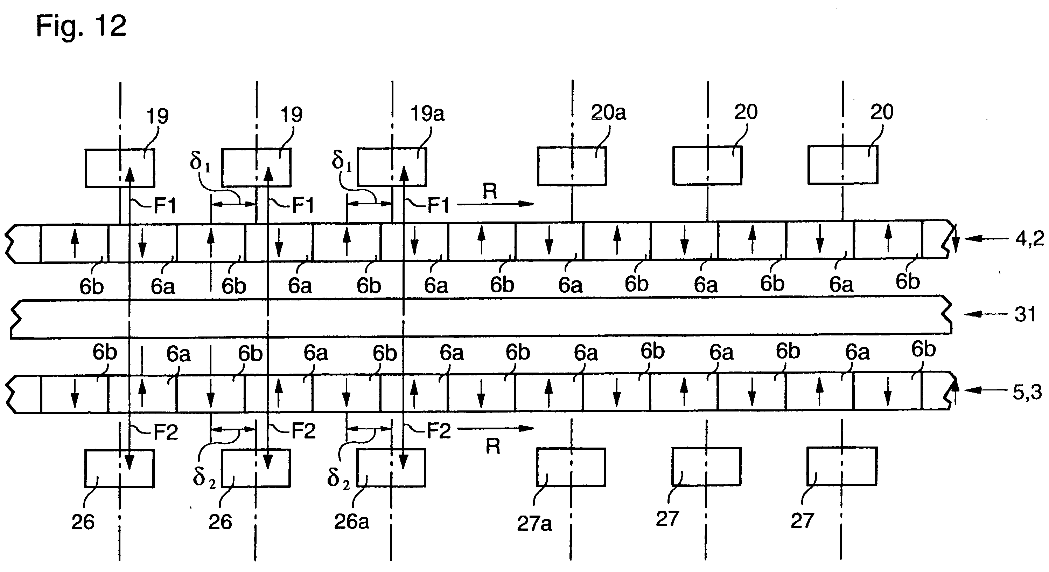

On rappellera que lorsque le rotor 2 se trouve dans l'une quelconque de ses deuxièmes positions de repos, les dipôles magnétiques 6 dont l'axe géométrique fait avec l'une des dents 19 l'angle δ₁ défini ci-dessus sont tous des dipôles 6b. La figure 12 illustre une telle situation.

Si le circuit de commande du moteur 1 applique alors une impulsion motrice négative à la bobine 51, le flux magnétique F1 créé par cette dernière traverse l'aimant 4 dans le sens allant du pôle statorique 31 vers les dents 19, comme cela est représenté à la figure 12.

Dans l'aimant 4, le flux magnétique F1 a donc le même sens que les axes d'aimantation des dipôles magnétiques 6b situés partiellement en regard des dents 19.

L'interaction du flux magnétique F1 et du flux magnétique produit par les dipôles magnétiques 6a et 6b qui se trouvent partiellement en regard des dents 19 crée donc aussi un couple moteur qui s'applique au rotor 2. Ce couple moteur tend à aligner les axes d'aimantation de ces derniers dipôles 6b avec le flux F1 et fait donc aussi tourner le rotor 2 dans le sens trigonométrique négatif.

D'une manière analogue à celle qui a été décrite ci-dessus, le rotor 2 termine son pas après la fin de l'impulsion motrice négative appliquée à la bobine 51 et atteint sa prochaine position de repos, qui est évidemment l'une de ses premières positions de repos.

En résumé, on voit que le rotor 2 tourne par pas dans le sens trigonométrique négatif en réponse à des impulsions motrices de polarités alternées appliquées successivement à la bobine 51.

On voit également que le rotor 3 n'est absolument pas influencé par les impulsions motrices appliquées à la bobine 51 puisque ces impulsions motrices ne provoquent le passage d'aucun flux magnétique dans l'aimant 5 de ce rotor 3.

Les figures 11 et 12 illustrent aussi respectivement un cas où le rotor 3 est dans l'une de ses premières positions de repos et un cas où ce rotor 3 est dans l'une de ses deuxièmes positions de repos. Les flux F2 créés respectivement par une impulsion motrice positive et une impulsion motrice négative appliquées à la bobine 52 sont également représentés dans ces figures 11 et 12.

On voit facilement que, pour des raisons semblables à celles qui ont été données ci-dessus dans le cas du rotor 2, le rotor 3 tourne également par pas successifs dans le sens trigonométrique négatif en réponse à des impulsions motrices de polarités alternées appliquées à la bobine 52 par le circuit de commande du moteur 1. Les raisons de cette rotation du rotor 3 ne seront donc pas détaillées ici.

On notera cependant que le rotor 2 n'est pas non plus influencé par les impulsions motrices appliquées à la bobine 52 puisque ces impulsions motrices ne provoquent le passage d'aucun flux magnétique dans l'aimant 4 de ce rotor 2.

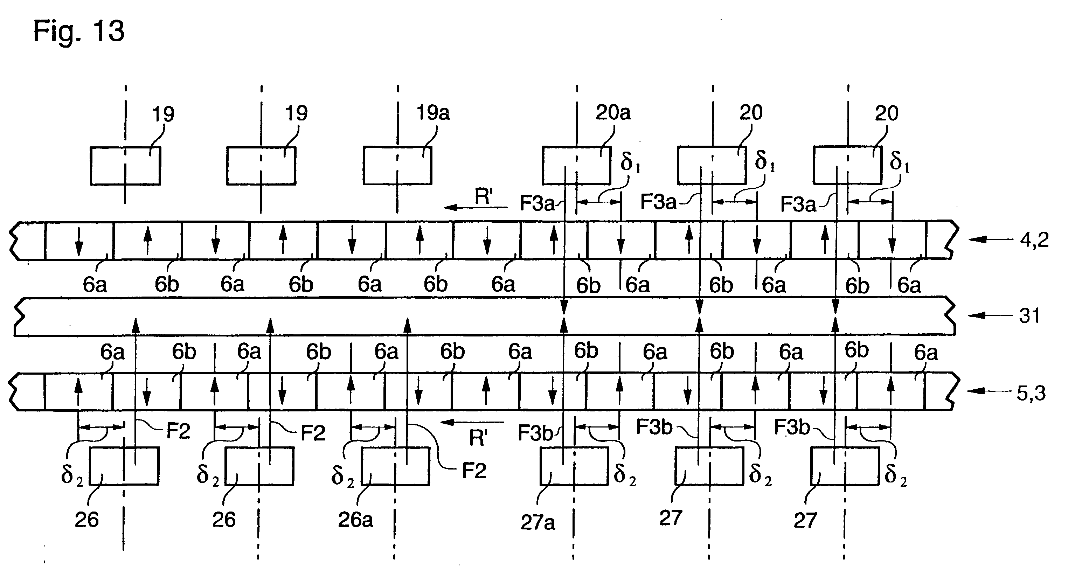

La figure 13 illustre un cas où les rotors 2 et 3 sont tous deux dans l'une de leurs premières positions de repos.

Des considérations analogues à celles qui ont été faites ci-dessus, et qui ne seront donc pas refaites ici, montrent que si le circuit de commande du moteur 1 applique alors une impulsion motrice positive à la bobine 53, les deux portions F3a et F3b du flux magnétique F3 créé par cette bobine 53 traversent respectivement l'aimant 4 du rotor 2 et l'aimant 5 du rotor 3 dans le sens de l'axe d'aimantation des dipôles magnétiques 6a de ces aimants 4 et 5. Ces flux magnétiques F3a et F3b ont également été symbolisés dans la figure 13. Cette impulsion motrice positive appliquée à la bobine 53 provoque donc l'application aux rotors 2 et 3 de couples qui tendent à les faire tourner dans le sens trigonométrique positif, qui est symbolisé dans la figure 13 par la flèche R'.

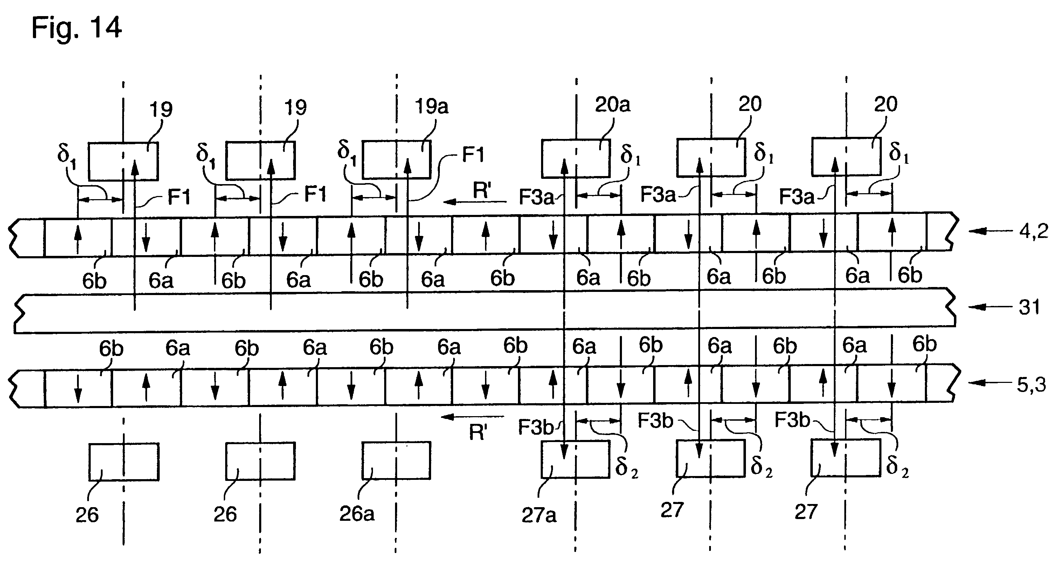

Si aucune autre mesure n'est prise, ces rotors 2 et 3 tournent donc simultanément dans le sens trigonométrique positif en réponse à cette impulsion motrice positive appliquée à la bobine 53. Après la fin de cette dernière impulsion motrice, chacun des rotors 2 et 3 termine son pas et atteint sa prochaine position de repos qui est bien entendu l'une de ses deuxièmes positions de repos. Cette situation est illustrée par la figure 14.

On voit facilement que si le circuit de commande du moteur 1 applique alors une impulsion motrice négative à la bobine 53, les flux magnétiques F3a et F3b ont, dans les aimants 4 et 5, le même sens que les axes d'aimantation des dipôles magnétiques 6b, comme cela a été représenté à la figure 14. Le couple qui s'applique aux rotors 2 et 3 tend donc à les faire tourner également dans le sens trigonométrique positif symbolisé par la flèche R'.

A nouveau, si aucune autre mesure n'est prise, les rotors 2 et 3 tournent donc simultanément dans le sens trigonométrique positif en réponse à cette impulsion motrice négative appliquée à la bobine 53 et, après la fin de celle-ci, terminent leur pas et atteignent leur prochaine position de repos qui est bien entendu l'une de leurs premières positions de repos.

On a vu ci-dessus que, lorsque le rotor 2 ou le rotor 3 sont dans l'une de leurs premières positions de repos, une impulsion motrice positive fait tourner ce rotor 2 ou ce rotor 3 dans le sens trigonométrique négatif si elle est respectivement appliquée à la bobine 51 ou à la bobine 52, et dans le sens trigonométrique positif si elle est appliquée à la bobine 53.

Il est donc possible d'éviter que les rotors 2 et 3 ne tournent simultanément en réponse à une impulsion motrice appliquée à la bobine 53 comme cela a été décrit ci-dessus, ce qui n'est en général pas souhaité.

Pour cela, le circuit de commande du moteur 1 est agencé de manière que, lorsqu'il applique à la bobine 53 une impulsion motrice, il applique simultanément une autre impulsion motrice de même polarité à la bobine 52 si le rotor 2 doit être le seul à tourner, ou à la bobine 51 si le rotor 3 doit être le seul à tourner.

La figure 13 illustre un tel cas, où seul le rotor 2 doit tourner dans le sens trigonométrique positif en réponse à une impulsion motrice positive appliquée à la bobine 53. Le circuit de commande du moteur 1 applique donc, en même temps que cette dernière, une autre impulsion motrice, également positive, à la bobine 52. Le flux magnétique F2 produit par cette bobine 52 en réponse à cette deuxième impulsion motrice est également représenté dans la figure 13.

Les caractéristiques du moteur 1 et de son circuit de commande sont déterminées de manière que les deux couples qui s'exercent alors sur le rotor 3 soient égaux en valeur absolue. Ces deux couples ayant des sens opposés s'annulent donc mutuellement. Le rotor 3 reste donc immobile et seul le rotor 2 tourne d'un pas dans le sens trigonométrique positif en réponse à l'impulsion motrice positive appliquée à la bobine 53.

La figure 14 illustre un cas où seul le rotor 3 doit tourner d'un pas dans le sens trigonométrique positif à partir de l'une de ses deuxièmes positions de repos en réponse à une impulsion motrice négative appliquée à la bobine 53.

On voit facilement que, dans un tel cas, le circuit de commande du moteur 1 applique à la bobine 51 une autre impulsion motrice, également négative. Les flux magnétiques F1, également représenté dans la figure 14, et F3a exercent alors sur le rotor 2 deux couples de valeur absolues égales mais de sens opposés, de sorte que le rotor 2 est bloqué et que seul le rotor 3 tourne d'un pas en réponse à l'impulsion motrice négative appliquée à la bobine 53.

Le fonctionnement du moteur 1 dans tous les autres cas qui peuvent se présenter ne sera pas décrit ici car il se déduit aisément des explications qui ont été données ci-dessus.

Dans la première forme d'exécution du moteur selon la présente invention décrite ci-dessus, l'angle de déphasage des dents 20 par rapport aux dents 19 et l'angle de déphasage des dents 27 par rapport aux dents 26 sont respectivement égaux à +2α₁/3 et à +2α₂/3 dans le sens trigonométrique négatif.

Dans une deuxième forme d'exécution du moteur selon la présente invention, qui n'a pas été représentée, ces deux angles de déphasage sont respectivement égaux à -2α₁/3 et à -2α₂/3, toujours dans le sens trigonométrique négatif.

L'homme du métier verra facilement que, dans cette deuxième forme d'exécution, les dipôles magnétiques 6a et, respectivement, 6b de l'aimant 4 sont déphasés dans le sens trigonométrique négatif d'un angle égal à +2α₁/3 par rapport aux dents 19 et par conséquent, d'un angle égal à -2α₁/3 par rapport aux dents 20 lorsque le rotor 2 occupe l'une de ses premières et, respectivement, de ses deuxièmes positions de repos.

De même, dans les premières et dans les deuxièmes positions de repos du rotor 3, les dipôles magnétiques 6a et, respectivement, 6b de l'aimant 5 sont déphasés dans le sens trigonométrique négatif d'un angle égal à +2α₂/3 par rapport aux dents 26 et par conséquent, d'un angle égal à -2α₂/3 par rapport aux dents 27.

L'homme du métier verra aussi facilement que, dans cette deuxième forme d'exécution, des impulsions motrices de polarités alternés appliquées à la bobine 51 ou à la bobine 52 font respectivement tourner le rotor 2 ou le rotor 3 dans le sens trigonométrique positif, alors que de telles impulsions motrices font tourner ce rotor 2 et ce rotor 3 dans le sens trigonométrique négatif lorsqu'elles sont appliquées à la bobine 53. En outre, ce rotor 2 et ce rotor 3 tournent, seuls, dans ce sens trigonométrique négatif si des impulsions motrices sont appliquées à la bobine 52 et, respectivement, 51 en même temps et avec la même polarité que celles qui sont appliquées à la bobine 53.

Il est évident que les deux formes d'exécution qui ont été décrites ci-dessus peuvent être combinées, les dents faisant partie de l'une des parties statoriques 11 et 12 et les dents faisant partie de l'autre de ces parties statoriques 11 et 12 étant respectivement disposées comme dans la première et comme dans la deuxième forme d'exécution décrite ci-dessus.

Dans la deuxième forme d'exécution décrite ci-dessus, les dents 20 sont déphasées par rapport aux dents 19 d'un angle égal à -2α₁/3 dans le sens trigonométrique négatif. Il est évident que ce fait peut également être exprimé en disant que les dents 19 sont déphasées par rapport aux dents 20 d'un angle égal à +2α₁/3, aussi dans le sens trigonométrique négatif.

On voit donc que, dans les deux formes d'exécution décrites ci-dessus, il y a toujours une première des deux pluralités de dents de la partie statorique 11 qui est déphasée par rapport à la deuxième de ces deux pluralités de dents d'un angle égal à +2α₁/3 dans le sens trigonométrique négatif. Dans la première forme d'exécution décrite ci-dessus, cette première et cette deuxième pluralité de dents sont respectivement constituées par les dents 20 et les dents 19, alors que dans la deuxième forme d'exécution décrite ci-dessus, ces deux pluralités sont respectivement constituées par les dents 19 et les dents 20.

On voit également que, avec cette même terminologie, dans les deux formes d'exécution décrites ci-dessus les dipôles magnétiques 6a et, respectivement 6b de l'aimant 4 sont déphasés dans le sens trigonométrique négatif d'un angle de +2α₁/3 par rapport aux dents de la première pluralité de dents et d'un angle de -2α₁/3 par rapport aux dents de la deuxième pluralité de dents dans les premières et dans les deuxièmes positions de repos du rotor 2.

Des considérations analogues peuvent être faites à propos des dents 26 et 27 de la partie statorique 12 et du rotor 3 qui leur est associé. Ainsi, on voit que, dans les deux formes d'exécution décrites ci-dessus, une première des deux pluralités de dents de la partie statorique 12, c'est à dire les dents 27 et, respectivement, les dents 26, est déphasée par rapport à la deuxième de ces deux pluralités de dents, c'est à dire les dents 26 et, respectivement, les dents 27, d'un angle égal à +2α₂/3 dans le sens trigonométrique négatif. De même, dans les deux formes d'exécution décrites ci-dessus, les dipôles magnétiques 6a et, respectivement, 6b de l'aimant 5 sont déphasés dans le sens trigonométrique négatif d'un angle de +2α₂/3 par rapport aux dents de la première pluralité de dents de la partie statorique 12 et d'un angle de -2α₂/3 par rapport aux dents de la deuxième pluralité de dents de cette partie statorique 12 dans les premières et dans les deuxièmes positions de repos du rotor 3.

Comme on l'a vu ci-dessus, la pluralité de dents 19 n'est reliée magnétiquement qu'à la bobine 51, et la pluralité de dents 26 n'est reliée magnétiquement qu'à la bobine 52. Par contre, la pluralité de dents 20 et la pluralité de dents 27 sont reliées magnétiquement, ensemble, à la bobine 53. D'autre part, l'aimant 4 du rotor 2 est couplé magnétiquement aux dents 19 et aux dents 20, alors que l'aimant 5 du rotor 3 est couplé magnétiquement aux dents 26 et aux dents 27.

En comparant le fonctionnement des deux formes d'exécution du moteur 1 décrites ci-dessus et en utilisant la terminologie définie également ci-dessus, on voit que, dans ces deux formes d'exécution, chacun des rotors 2 et 3 tourne dans le sens trigonométrique positif et dans le sens trigonométrique négatif en réponse à des impulsions motrices de polarités alternées appliquées à celle des bobines 51, 52 et 53 qui est reliée magnétiquement à la première et, respectivement, à la deuxième pluralité de dents couplées magnétiquement à l'aimant 4 ou 5 de ce rotor 2 ou 3.

Si la bobine à laquelle sont appliquées ces impulsions motrices est celle qui est reliée à deux pluralités de dents, ce qui est le cas de la bobine 53 dans les exemples ci-dessus, et si un seul des rotors 2 ou 3 doit tourner en réponse à ces impulsions motrices, il faut en outre appliquer d'autres impulsions motrices, en synchronisme avec les précédentes et avec la même polarité que celles-ci, à celle des deux autres bobines, 51 ou 52, qui est reliée à la pluralité de dents couplées à l'aimant 4 ou 5 de l'autre de ces rotors 2 ou 3.

Il est évident que de nombreuses autres formes d'exécution du moteur selon la présente invention peuvent être réalisées sans sortir pour autant du cadre de cette invention. Quelques unes de ces formes d'exécution vont être décrites succinctement ci-après, toujours à titre d'exemples non limitatifs, sans être représentées mais en désignant leurs composants par les mêmes références que dans les descriptions qui ont été faites ci-dessus.

Dans l'une de ces formes d'exécution, les parties statoriques 11 et/ou 12, ainsi que la partie statorique 13, sont conformées et disposées de manière que, dans une vue en plan du moteur 1 telle que celle qui est représentée à la figure 1, les bobines 51 et 52 ne soient pas superposées mais décalées l'une par rapport à l'autre. Une telle disposition permet d'utiliser des bobines 51 et 52 ayant un diamètre plus grand que celui qu'elles ont dans l'exemple illustré par les figures 1 et 2 sans que l'épaisseur totale du moteur 1 ne soit trop importante.

Dans une autre de ces formes d'exécution, les aimants 4 et 5 des rotors 2 et 3 sont identiques. Il en découle que les nombres N₁ et N₂ des dipôles magnétiques 6 que comportent ces aimants 4 et 5 sont égaux, de même que les angles α₁ et α₂ d'une part et les angles β₁ et β₂ d'autre part. En outre, les nombres k₁ et k₂ mentionnés ci-dessus sont aussi égaux, de sorte que les angles γ₁ et γ₂ le sont aussi.

Enfin, les parties statoriques 11 et 12 sont agencées et disposées de manière que les cercles qui circonscrivent les ouvertures 14 et 21 aient des diamètres égaux et que les dents 19 et les dents 26 soient situées en regard les unes des autres, de même que les dents 20 et les dents 27.

Dans cette forme d'exécution, la partie statorique 13 est également percée d'une ouverture circonscrite par un cercle centré sur l'axe de rotation A et ayant sensiblement le même diamètre que le cercle qui circonscrit les ouvertures 14 et 21 respectivement ménagées dans les parties statoriques 11 et 12. Comme dans ces dernières, des dents s'étendent radialement depuis le bord de l'ouverture ménagée dans la partie statorique 13 en direction de l'axe de rotation A. En outre, chacune de ces dents est disposée en regard de l'une des dents 19 ou 20 de la partie statorique 11, et donc également en regard de l'une des dents 26 ou 27 de la partie statorique 12. Ces dents de la partie statorique 13 sont toutes reliées magnétiquement par la portion de cette partie statorique 13 qui les entoure et forment avec cette portion un pôle statorique. Ce pôle statorique de la partie statorique 13 est également relié magnétiquement aux noyaux 54 à 56 des bobines 51 à 53 par une portion de liaison analogue à la portion de liaison 34 décrite ci-dessus. Une partie statorique 13 conformée de cette manière permet de mieux diriger les flux magnétiques F1, F2, F3a et F3b dans les entrefers 41 à 48 et donc d'augmenter l'efficacité du moteur 1.

Dans une autre forme d'exécution du moteur selon la présente invention, la liaison mécanique et magnétique entre les pôles statoriques 16 et 23 et avec le noyau 56 de la bobine 53 est assurée grâce au fait que les parties statoriques 11 et/ou 12 sont pliées de manière que ces pôles statoriques 16 et 23 soient en contact l'un avec l'autre dans une zone éloignée de l'ouverture 14 et des dents 20 et, respectivement, de l'ouverture 21 et des dents 27. En outre, ces pôles statoriques 16 et 23 sont fixés l'un à l'autre dans cette même zone, et l'un d'entre eux est en plus fixé à l'extrémité du noyau 56 de la bobine 53, toujours dans cette même zone.

Dans une variante de cette forme d'exécution, les pôles statoriques 16 et 23 ne sont pas directement en contact l'un avec l'autre dans la zone ci-dessus mais sont en contact, chacun, avec une des faces de l'extrémité du noyau 56, qui est ainsi enserré entre eux.

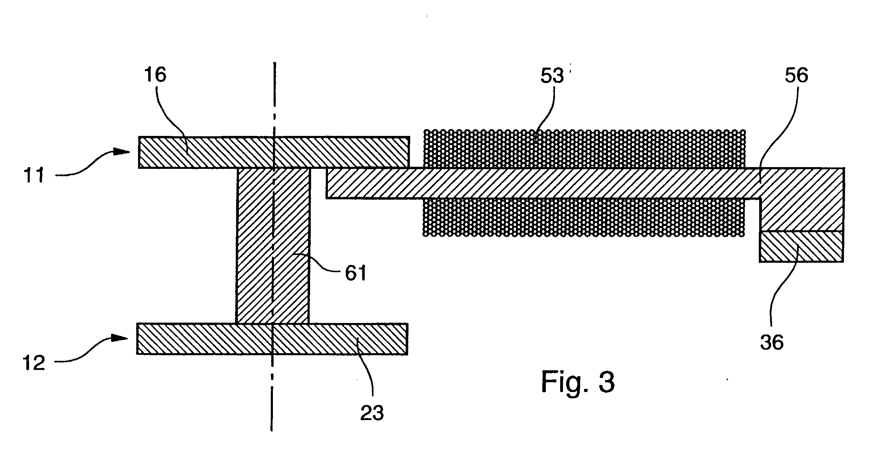

Dans cette dernière forme d'exécution, l'entretoise 61, qui assure la liaison mécanique et magnétique des pôles statoriques 16 et 23 dans l'exemple illustré notamment par les figures 1 et 3, n'existe donc pas.

Dans les formes d'exécution décrites ci-dessus, les angles au centre formés par les flancs de chacune des dents 19 et par les flancs de chacune des dents 20 sont égaux entre eux, ainsi qu'aux angles au centre formés par les flancs de deux dents 19 adjacentes et par les flancs de deux dents 20 adjacentes. Tous ces angles au centre sont égaux à l'angle α₁, et donc à la moitié de l'angle β₁. En d'autres termes, si l'on désigne par d₁ et d₂ les angles au centre formés respectivement par les flancs de chacune des dents 19 et par les flancs de chacune des dents 20, on a d₁=d₂=α₁=0,5^{β}₁.

L'homme du métier comprendra aisément que le couple de positionnement appliqué au rotor 2 résulte en fait de l'addition algébrique de deux couples antagonistes dus respectivement à la présence des dents 19 et à la présence des dents 20. En outre, l'homme du métier verra facilement que l'amplitude de chacun de ces deux couples dépend notamment du rapport entre les angles d₁ et, respectivement, d₂ qui viennent d'être définis et l'angle β₁.

Il en découle que si l'on choisit pour les angles d₁ et d₂ des valeurs égales, les positions de repos du rotor 2 sont toujours celles qui ont été décrites dans les exemples ci-dessus, c'est-à-dire que les angles de déphasage des dipôles mangétiques 6 par rapport aux dents 19 et par rapport aux dents 20 sont toujours tous deux égaux, en valeur absolue, à 2α₁/3. Dans un tel cas, par contre l'amplitude du couple de positionnement appliqué au rotor 2 diminue ou augmente selon que ces angles d₁ et d₂ sont inférieurs ou supérieurs à 0,5^{β}₁. En pratique, on choisira de préférence des valeurs comprises entre 0,3^{β}₁ et 0,7^{β}₁ pour les angles d₁ et d₂. Il en découle également que si l'on choisit pour les angles d₁ et d₂ des valeurs différentes l'une de l'autre, les angles de déphasage des dipôles magnétiques 6 par rapport aux dents 19 et par rapport aux dents 20 deviennent différents l'un de l'autre. Ainsi, si l'angle d₁ est plus grand que l'angle d₂, par exemple, l'amplitude du couple dû à la présence des dents 19 est plus grande que celle du couple dû à la présence des dents 20. Il en résulte que, dans ce cas, l'angle de déphasage des dipôles 6 par rapport aux dents 19 est plus petit, en valeur absolue, que l'angle de déphasage de ces dipôles 6 par rapport aux dents 20, et ceci dans toutes les positions de repos du rotor 2.

Cette dernière relation est bien entendu inversée si l'angle d₁ est plus petit que l'angle d₂.

En pratique, la valeur de l'un des angles de déphasage des dipôles magnétiques 6 par rapport aux dents 19 ou, respectivement, 20, peut être choisie entre α₁/2 et 2,5α₁/2. La valeur de l'autre de ces angles de déphasage est alors déterminée par le fait que la somme de ces deux angles est évidemment toujours égale à 4α₁/3.

Il n'est malheureusement pas possible d'établir une relation simple permettant de déterminer les valeurs que les angles d₁ et d₂ doivent avoir pour que les angles de déphasage qui viennent d'être mentionnés aient les valeurs choisies.

En pratique, ces valeurs des angles d₁ et d₂ sont déterminées par des essais et/ou par des simulations faites à l'aide d'un ordinateur.

Les considérations qui viennent d'être faites au sujet du rotor 2 et des dents 19 et 20 peuvent évidemment aussi être faites au sujet du rotor 3 et des dents 26 et 27. Ces considérations ne seront pas répétées.

On mentionnera simplement que l'amplitude du couple de positionnement appliqué au rotor 3 peut être modifiée en donnant aux angles au centre d₃ et d₄ formés respectivement par les flancs des dents 26 et 27 des valeurs différentes de 0,5^{β}₂, ces valeurs étant de préférence comprises entre 0,3^{β}₂ et 0,7^{β}₂. En outre, les valeurs de ces angles d₃ et d₄ peuvent être déterminées, par des essais et/ou des simulations faites à l'aide d'un ordinateur, de manière que l'un des angles de déphasage des dipôles magnétiques 6 de l'aimant 5 par rapport aux dents 26 et, respectivement, 27 ait une valeur différente de 2α₂/3, comprise entre α₂/2 et 2,5α₂/3, l'autre de ces angles de déphasage ayant alors une valeur telle que la somme de ces deux angles de déphasage soit égale à 4α₂/3.

## Revendications

1. Moteur électromagnétique comportant :
- un premier (2) et un deuxième rotor (3) mobiles en rotation indépendamment l'un de l'autre autour d'un axe de rotation commun (A) et comprenant respectivement un premier (4) et un deuxième aimant permanent (5), ledit premier (4) et ledit deuxième aimant permanent (5) ayant respectivement une première et une deuxième pluralité de dipôles magnétiques (6) disposés annulairement et régulièrement autour dudit axe de rotation (A), orientés sensiblement parallèlement audit axe de rotation (A) alternativement dans un premier sens et dans le sens opposé et ayant chacun un axe géométrique radial, les axes géométriques de deux dipôles magnétiques (6) adjacents dudit premier aimant (4) formant un premier angle au centre ayant une valeur α₁=360°/N₁, où N₁ est le nombre de dipôles magnétiques (6) dudit premier aimant (4),et les axes géométriques de deux dipôles magnétiques (6) adjacents dudit deuxième aimant (5) formant un deuxième angle au centre ayant une valeur α₂ = 360°/N₂, où N₂ est le nombre de dipôles magnétiques (6) dudit deuxième aimant (5) ;
- une première partie statorique (11) comprenant un premier (15) et un deuxième pôle statorique (16) séparés par une première ouverture statorique (14) et comportant respectivement une première pluralité de dents (19) et une deuxième pluralité de dents (20), les dents (19, 20) desdites première et deuxième pluralités de dents s'étendant radialement, en regard dudit premier aimant (4), depuis le bord de ladite première ouverture statorique (14) en direction dudit axe de rotation (A) et ayant chacune un axe radial et deux flancs, les axes de deux dents (19) adjacentes de ladite première pluralité de dents et les axes de deux dents (20) adjacentes de ladite deuxième pluralité de dents formant des troisièmes angles au centre ayant une valeur β₁ = 2 α₁, et les dents (20;19) de l'une desdites première et deuxième pluralités de dents étant déphasées par rapport aux dents (19;20) de l'autre desdites première et deuxième pluralités de dents d'un premier angle de déphasage ayant une valeur égale à +2α₁/3 dans le sens trigonométrique négatif;
- une deuxième partie statorique (12) comprenant un troisième (22) et un quatrième pôle statorique (23) séparés par une deuxième ouverture statorique (21) et comportant respectivement une troisième pluralité de dents (26) et une quatrième pluralité de dents (27), les dents (26, 27) desdites troisième et quatrième pluralités de dents s'étendant radialement, en regard dudit.deuxième aimant (5), depuis le bord de ladite deuxième ouverture statorique (21) en direction dudit axe de rotation (A) et ayant chacune un axe radial et deux flancs, les axes de deux dents (26) adjacentes de ladite troisième pluralité de dents et les axes de deux dents (27) adjacentes de ladite quatrième pluralité de dents formant des quatrièmes angles au centre ayant une valeur β₂=2α₂, et les dents (27;26) de l'une desdites troisième et quatrième pluralités de dents étant déphasées par rapport aux dents (26;27) de l'autre desdites troisième et quatrième pluralités de dents d'un deuxième angle de déphasage ayant une valeur égale à +2α₂/3 dans le sens trigonométrique négatif;
- une troisième partie statorique (13) comportant un cinquième pôle statorique (31) disposé entre lesdits aimants (4, 5), lesdits aimants (4, 5) étant en outre disposés entre ledit cinquième pôle statorique (31) et, respectivement, ledit premier (15) et ledit deuxième pôle statorique (16) d'une part et ledit troisième (22) et ledit quatrième pôle statorique (23) d'autre part;
- une première bobine (51) comportant un noyau (54) ayant une première et une deuxième extrémité respectivement reliées magnétiquement audit premier pôle statorique (15) et audit cinquième pôle statorique (31);
- une deuxième bobine (52) comportant un noyau (55) ayant une première et une deuxième extrémité respectivement reliées magnétiquement audit troisième pôle statorique (22) et audit cinquième pôle statorique (31); et
- une troisième bobine (53) comportant un noyau (56) ayant une première extrémité reliée magnétiquement auxdits deuxième (16) et quatrième pôles statoriques (23) et une deuxième extrémité reliée magnétiquement audit cinquième pôle statorique (31).

2. Moteur électromagnétique selon la revendication 1, **caractérisé par le fait que** lesdits deuxième (16) et quatrième pôles statoriques (23) sont reliés magnétiquement par une entretoise (61).

3. Moteur électromagnétique selon la revendication 1 **caractérisé par le fait que** lesdits deuxième (16) et quatrième pôles statoriques (23) sont en contact l'un avec l'autre dans une zone éloignée desdites première (14) et, respectivement, deuxième ouvertures statoriques (21).

4. Moteur électromagnétique selon la revendication 1 **caractérisé par le fait que** ledit nombre N₁ de dipôles magnétiques (6) dudit premier aimant (4) est égal audit nombre N2 de dipôles magnétiques (6) dudit deuxième aimant (5), que chacune des dents (19, 20) desdites première et deuxième pluralités de dents est disposée en regard de l'une des dents (26, 27) desdites troisième et quatrième pluralités de dents, et que ledit cinquième pôle statorique comporte une cinquième pluralité de dents disposées chacune en regard de l'une des dents (19, 20) desdites première et deuxième pluralités de dents.

5. Moteur électromagnétique selon la revendication 1 **caractérisé par le fait que** les angles au centre formés par les flancs de chacune des dents (19) de ladite première pluralité de dents et les angles au centre formés par les flancs de chacune des dents (20) de ladite deuxième pluralité de dents ont des valeurs telles que, en l'absence de toute autre influence, ledit premier rotor (2) occupe une position angulaire dans laquelle les axes géométriques des dipôles magnétiques (6) dudit premier aimant (4) sont déphasés par rapport aux axes des dents de l'une desdites première (19) et deuxième pluralités de dents (20) d'un troisième angle de déphasage ayant une valeur comprise entre +α₁/2 et +2,5α₁/3 dans le sens trigonométrique négatif.

6. Moteur électromagnétique selon la revendication 1 **caractérisé par le fait que** les angles au centre formés par les flancs de chacune des dents (26) de ladite troisième pluralité de dents et les angles au centre formés par les flancs de chacune des dents (27) de ladite quatrième pluralité de dents ont des valeurs telles que, en l'absence de toute autre influence, ledit deuxième rotor (3) occupe une position angulaire dans laquelle les axes géométriques des dipôles magnétiques (6) dudit deuxième aimant (5) sont déphasés par rapport aux axes des dents de l'une desdites troisième (26) et quatrième pluralités de dents (27) d'un troisième angle de déphasage ayant une valeur comprise entre +α₂/2 et +2,5α₂/3 dans le sens trigonométrique négatif.

7. Moteur électromagnétique selon la revendication 5, **caractérisé par le fait que** ledit troisième angle de déphasage a une valeur sensiblement égale à 2α₁/3.

8. Moteur électromagnétique selon la revendication 6, **caractérisé par le fait que** ledit quatrième angle de déphasage a une valeur sensiblement égale à 2α₂/3.

9. Moteur électromagnétique selon la revendication 5, **caractérisé par le fait que** lesdits angles au centre formés par les flancs de chacune des dents (19) de ladite première pluralité de dents et lesdits angles au centre formés par les flancs de chacune des dents (20) de ladite deuxième pluralité de dents ont des valeurs comprises entre 0,3^{β}₁ et 0,7^{β}₁.

10. Moteur électromagnétique selon la revendication 6, **caractérisé par le fait que** lesdits angles au centre formés par les flancs de chacune des dents (26) de ladite troisième pluralité de dents et lesdits angles au centre formés par les flancs de chacune des dents (27) de ladite quatrième pluralité de dents ont des valeurs comprises entre 0,3^{β}₂ et 0,7^{β}₂.

## Claims

1. Electromagnetic motor including.
- a first rotor (2) and a second rotor (3) able to rotate independently of each other about a common rotation axis (A) and comprising a first (4) and a second (5) permanent magnet respectively, said first (4) and a second (5) permanent magnet having respectively a first and a second plurality of magnetic dipoles (6) arranged regularly in a annular manner about said rotation axis (A), oriented substantially parallel to axis (A) alternatively in a first direction and in an opposite second direction and each having a radial geometric axis, the geometric axes of two adjacent magnetic dipoles (6) of said first magnet (4) forming a first angle at centre having a value of α₁=360°/N1, where N1 is the number of magnetic dipoles (6) of said first magnet (4), and the geometric axes of the two magnetic dipoles (6) adjacent to said second magnet (5) forming a second angle at centre having a value of α₂=360°/N2, where N2 is the number of magnetic dipoles (6) of said second magnet (5)
- a first stator part (11) including a first (15) and a second stator pole (16) separated by a first stator opening (14) and respectively including a first plurality of teeth (19) and a second plurality of teeth (20), the teeth (19, 20) of said first and second plurality of teeth extending radially, facing said first magnet (4), from the edge of said stator opening (14) towards said rotation axis (A) and each having a radial axis and two flanks, the axes of two teeth (19) adjacent to said first plurality of teeth and the axes of two teeth (20) adjacent to said second plurality of teeth forming third angles at centre having a value β₁=2α₁, and the teeth (20; 19) of one of said first and second plurality of teeth being phase-shifted with respect to teeth (19; 20) of the other of said first and second plurality of teeth by an phase-shift angle having a value equal to +2α₁/3 in the negative trigonometric direction;
- a second stator part (12) including a third (22) and a fourth stator pole (23) separated by a second stator opening (21) and respectively including a third plurality of teeth (26) and a fourth plurality of teeth (27), the teeth (26, 27) of said third and fourth plurality of teeth extending radially, facing said second magnet (5), from the edge of said second stator opening (21) towards said rotation axis (A) and each having a radial axis and two flanks, the axes of two teeth (26) adjacent to said third plurality of teeth and the axes of two teeth (27) adjacent to said fourth plurality of teeth forming fourth angles at centre having a value β₂=2α₂, and the teeth (27; 26) of one of said third and fourth plurality of teeth being phase-shifted with respect to teeth (26; 27) of the other of said third and fourth plurality of teeth by a second phase-shift angle having a value equal to +2a2/3 in the negative trigonometric direction;
- a third stator part (13) including a fifth stator pole (31) arranged between said magnets (4, 5), said magnets (4,5) being further arranged between said fifth stator pole (31) and respectively said first (15) and said second stator pole (16), on the one hand, and said third (22) and said fourth stator pole (23) on the other hand;
- a first coil (51) including a core (54) having a first and a second end magnetically coupled to said first stator pole (15) and to said fifth stator pole (31) respectively;
- a second coil (52) including a core (55) having a first and a second end magnetically coupled to said third stator pole (22) and to said fifth stator pole (31) respectively;
- a third coil (53) including a core (56) having a first end magnetically coupled to said second (16) and fourth (23) stator poles and a second end magnetically coupled to said fifth stator pole (31).

2. Electromagnetic motor according to claim 1, **characterised in that** said second (16) and fourth (23) stator poles are magnetically coupled by means of a spacer or strut (61).

3. Electromagnetic motor according to claim 1, **characterised in that** said second (16) and fourth (23) stator poles are in contact with each other in a zone remote from said first (14) and respectively second stator opening (21).

4. Electromagnetic motor according to claim 1, **characterised in that** the number N1 of magnetic dipoles (6) of said first magnet (4) is equal to the number N2 of magnetic dipoles (6) of said second magnet (5), **in that** each of the teeth (19, 20) of said first and second pluralities of teeth is arranged facing one of the teeth (26, 27) of said third and fourth pluralities of teeth and that said fifth stator pole includes a fifth plurality of teeth, each arranged facing one of the teeth (19,20) of said first and second pluralities of teeth.

5. Electromagnetic motor according to claim 1, **characterised in that** the angles at centre formed by the flanks of each of the teeth (19) of said first plurality of teeth and the angles at centre formed by the flanks of each of the teeth (20) of said second plurality of teeth have values such that in the absence of any other influence, said first rotor (2) occupies an angular position in which the geometric axes of the magnetic dipoles (6) of said first magnet (4) are phase-shifted with respect to the axes of teeth of one of the first (19) and second (20) pluralities of teeth by a third phase-shift angle having a value comprised between +α₁/2 and +2.5α₁/3 in the negative trigonometric direction.

6. Electromagnetic motor according to claim 1, **characterised in that** the angles at centre formed by the flanks of each of the teeth (26) of said third plurality of teeth and the angles at centre formed by the flanks of each of the teeth (27) of said fourth plurality of teeth have values such that in the absence of any other influence, said second rotor (3) occupies an angular position in which the geometric axes of the magnetic dipoles (6) of said second magnet (5) are phase-shifted with respect to the axes of teeth of one of the third (26) and fourth (27) pluralities of teeth by a third phase-shift angle having a value comprised between +α₂/2 and +2.5α₂/3 in the negative trigonometric direction.

7. Electromagnetic motor according to claim 5, **characterised in that** the third phase-shift angle has a value substantially equal to +2α₁/3.

8. Electromagnetic motor according to claim 6, **characterised in that** third phase-shift angle has a value substantially equal to +2α₂/3.

9. Electromagnetic motor according to claim 5, **characterised in that** the angles at centre formed by the flanks of each of the teeth (19) of said first plurality of teeth and the angles at centre formed by the flanks of each of the teeth (20) of said second plurality of teeth have values comprised between 0.3β₁ and 0.7β₁.

10. Electromagnetic motor according to claim 5, **characterised in that** the angles at centre formed by the flanks of each of the teeth (26) of said third plurality of teeth and the angles at centre formed by the flanks of each of the teeth (27) of said fourth plurality of teeth have values comprised between 0.3β₂ and 0.7β₂.

## Patentansprüche

1. Elektromagnetischer Motor, der umfaßt:
- einen ersten Rotor (2) und einen zweiten Rotor (3), die sich unabhängig voneinander um eine gemeinsame Drehachse (A) drehen können und einen ersten Permanentmagneten (4) bzw. einen zweiten Permanentmagneten (5) umfassen, wobei der erste Permanentmagnet (4) und der zweite Permanentmagnet (5) eine erste bzw. eine zweite Mehrzahl von magnetischen Dipolen (6) besitzen, die ringförmig und regelmäßig um die Drehachse (A) angeordnet sind, im wesentlichen parallel zu der Drehachse (A) abwechselnd in einer ersten Richtung und in der entgegengesetzten Richtung orientiert sind und jeweils eine radiale geometrische Achse besitzen, wobei die geometrischen Achsen von zwei benachbarten magnetischen Dipolen (6) des ersten Magneten (4) einen ersten Zentrumswinkel mit einem Wert α₁ = 360°/N₁ bilden, wobei N₁ die Anzahl der magnetischen Dipole (6) des ersten Magneten (4) ist, und die geometrischen Achsen von zwei benachbarten magnetischen Dipolen (6) des zweiten Magneten (5) einen zweiten Zentrumswinkel mit einem Wert α₂ = 360°/N₂ bilden, wobei N₂ die Anzahl der magnetischen Dipole (6) des zweiten Magneten (5) ist;
- ein erstes Statorteil (11), das einen ersten Statorpol (15) und einen zweiten Statorpol (16) umfaßt, die durch eine erste Statoröffnung (14) getrennt sind und eine erste Mehrzahl von Zähnen (19) bzw. eine zweite Mehrzahl von Zähnen (20) enthalten, wobei sich die Zähne (19, 20) der ersten und der zweiten Mehrzahl von Zähnen gegenüber dem ersten Magneten (4) vom Rand der ersten Statoröffnung (14) aus radial in Richtung zur Drehachse (A) erstrecken und jeweils eine radiale Achse und zwei Seitenflächen besitzen, wobei die Achsen von zwei benachbarten Zähnen (19) der ersten Mehrzahl von Zähnen und die Achsen von zwei benachbarten Zähnen (20) der zweiten Mehrzahl von Zähnen dritte Zentrumswinkel mit einem Wert β₁ = 2α₁ bilden und die Zähne (20; 19) der ersten oder der zweiten Mehrzahl von Zähnen in bezug auf die Zähne (19; 20) der anderen der ersten und der zweiten Mehrzahl von Zähnen um einen ersten Phasenverschiebungswinkel mit einem Wert, der gleich +2α₁/3 im negativen trigonometrischen Sinn ist, phasenverschoben sind;
- ein zweites Statorteil (12), das einen dritten Statorpol (22) und einen vierten Statorpol (23) umfaßt, die durch eine zweite Statoröffnung (21) getrennt sind und eine dritte Mehrzahl von Zähnen (26) bzw. eine vierte Mehrzahl von Zähnen (27) umfassen, wobei sich die Zähne (26, 27) der dritten und der vierten Mehrzahl von Zähnen gegenüber dem zweiten Magneten (5) von der Kante der zweiten Statoröffnung (21) aus radial in Richtung zur Drehachse (A) erstrecken und jeweils eine radiale Achse und zwei Seitenflächen besitzen, wobei die Achsen von zwei benachbarten Zähnen (26) der dritten Mehrzahl von Zähnen und die Achsen von zwei benachbarten Zähnen (27) der vierten Mehrzahl von Zähnen vierte Zentrumswinkel mit einem Wert β₂ = 2α₂ bilden und die Zähne (27; 26) einer der dritten und der vierten Mehrzahl von Zähnen in bezug auf die Zähne (26; 27) der anderen der dritten und der vierten Mehrzahl von Zähnen um einen zweiten Phasenverschiebungswinkel mit einem Wert, der gleich +2α₂/3 im negativen trigonometrischen Sinn ist, phasenverschoben sind;
- ein drittes Statorteil (13), das einen fünften Statorpol (31) umfaßt, der zwischen den Magneten (4, 5) angeordnet ist, wobei die Magneten (4, 5) außerdem zwischen dem fünften Statorpol (31) und dem ersten Statorpol (15) bzw. dem zweiten Statorpol (16) einerseits und dem dritten Statorpol (22) bzw. dem vierten Statorpol (23) andererseits angeordnet sind;
- eine erste Spule (51) mit einem Kern (54), der ein erstes Ende und ein zweites Ende besitzt, die mit dem ersten Statorpol (15) bzw. mit dem fünften Statorpol (31) magnetisch verbunden sind;
- eine zweite Spule (52) mit einem Kern (55), der ein erstes Ende und ein zweites Ende besitzt, die mit dem dritten Statorpol (22) bzw. mit dem fünften Statorpol (31) magnetisch verbunden sind; und
- eine dritte Spule (53) mit einem Kern (56), der ein erstes Ende, das mit dem zweiten Statorpol (16) und mit dem vierten Statorpol (23) magnetisch verbunden ist, sowie ein zweites Ende, das mit dem fünften Statorpol (31) magnetisch verbunden ist, besitzt.

2. Elektromagnetischer Motor nach Anspruch 1, **dadurch gekennzeichnet, daß** der zweite Statorpol (16) und der vierte Statorpol (23) durch einen Abstandshalter (61) magnetisch verbunden sind.

3. Elektromagnetischer Motor nach Anspruch 1, **dadurch gekennzeichnet, daß** der zweite Statorpol (16) und der vierte Statorpol (23) in einer entfernten Zone der ersten Statoröffnung (14) bzw. der zweiten Statoröffnung (21) in gegenseitigem Kontakt sind.

4. Elektromagnetischer Motor nach Anspruch 1, **dadurch gekennzeichnet, daß** die Anzahl N1 von magnetischen Dipolen (6) des ersten Magneten (4) gleich der Anzahl N₂ von magnetischen Dipolen (6) des zweiten Magneten (5) ist, daß jeder der Zähne (19, 20) der ersten und der zweiten Mehrzahl von Zähnen gegenüber einem der Zähne (26, 27) der dritten und der vierten Mehrzahl von Zähnen angeordnet ist und daß der fünfte Statorpol eine fünfte Mehrzahl von Zähnen besitzt, die jeweils gegenüber einem der Zähne (19, 20) der ersten und der zweiten Mehrzahl von Zähnen angeordnet sind.

5. Elektromagnetischer Motor nach Anspruch 1, **dadurch gekennzeichnet, daß** die Zentrumswinkel, die durch die Seitenflächen jedes der Zähne (19) der ersten Mehrzahl von Zähnen gebildet sind, und die Zentrumswinkel, die durch die Seitenflächen jedes der Zähne (20) der zweiten Mehrzahl von Zähnen gebildet sind, Werte besitzen, derart, daß der erste Rotor (2) bei Fehlen jeglichen anderen Einflusses eine Winkelposition einnimmt, in der die geometrischen Achsen der magnetischen Dipole (6) des ersten Magneten (4) in bezug auf die Achsen der Zähne der ersten Mehrzahl (19) oder der zweiten Mehrzahl von Zähnen (20) um einen dritten Phasenverschiebungswinkel mit einem Wert im Bereich von +α₁/2 und 2,5α₁/3 im negativen trigonometrischen Sinn phasenverschoben sind.

6. Elektromagnetischer Motor nach Anspruch 1, **dadurch gekennzeichnet, daß** die Zentrumswinkel, die durch die Seitenflächen jedes der Zähne (26) der dritten Mehrzahl von Zähnen gebildet sind, und die Zentrumswinkel, die durch die Seitenflächen jedes der Zähne (27) der vierten Mehrzahl von Zähnen gebitdet sind, Werte besitzen, derart, daß der zweite Rotor (3) bei Fehlen jeglichen anderen Einflusses eine Winkelposition einnimmt, in der die geometrischen Achsen der magnetischen Dipole (6) des zweiten Magneten (5) in bezug auf die Achsen der Zähne der dritten Mehrzahl (26) oder der vierten Mehrzahl von Zähnen (27) um einen dritten Phasenverschiebungswinkel mit einem Wert im Bereich von +α₂/2 bis +2,5α₂/3 im negativen trigonometrischen Sinn phasenverschoben sind.

7. Elektromagnetischer Motor nach Anspruch 5, **dadurch gekennzeichnet, daß** der dritte Phasenverschiebungswinkel einen Wert besitzt, der im wesentlichen gleich 2α₁/3 ist.

8. Elektromagnetischer Motor nach Anspruch 6, **dadurch gekennzeichnet, daß** der vierte Phasenverschiebungswinkel einen Wert besitzt, der im wesentlichen gleich 2α₂/3 ist.

9. Elektromagnetischer Motor nach Anspruch 5, **dadurch gekennzeichnet, daß** die Zentrumswinkel, die durch die Seitenflächen jedes der Zähne (19) der ersten Mehrzahl von Zähnen gebildet sind, und die Zentrumswinkel, die durch die Seitenfläche jedes der Zähne (20) der zweiten Mehrzahl von Zähnen gebildet sind, Werte im Bereich von 0,3^{β}₁ bis 0,7^{β}₁ besitzen.

10. Elektromagnetischer Motor nach Anspruch 6, **dadurch gekennzeichnet, daß** die Zentrumswinkel, die durch die Seitenflächen jedes der Zähne (26) der dritten Mehrzahl von Zähnen gebildet sind, und die Zentrumswinkel, die durch die Seitenflächen jedes der Zähne (27) der vierten Mehrzahl von Zähnen gebildet sind, Werte im Bereich von 0,3^{β}₂ bis 0,7^{β}₂ besitzen.
